(19)

Europäisches
Patentamt

European
Patent Office

Office européen
des brevets

(11) **EP 4 318 265 A1**

(12) **EUROPEAN PATENT APPLICATION**

(43) Date of publication:
**07.02.2024 Bulletin 2024/06**

(21) Application number: **23184373.1**

(22) Date of filing: **10.07.2023**

(51) International Patent Classification (IPC):
***G06F 16/2458*** *(2019.01)*

(52) Cooperative Patent Classification (CPC):
**G06F 16/2465; G06F 16/2477**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.08.2022 US 202217879055**

(71) Applicant: **ThoughtSpot, Inc.
Mountain View, CA 94041 (US)**

(72) Inventors:
• **OHM, Utkarsh
Mountain View, 94041 (US)**
• **MEHRA, Akshay
Bengaluru (IN)**
• **REDDY, Dheeraj
Bengaluru (IN)**
• **VASUDEVA, Gokul
Bengaluru (IN)**
• **SINHA, Harsh
Bengaluru (IN)**

(74) Representative: **Openshaw & Co.
8 Castle Street
Farnham, Surrey GU9 7HR (GB)**

(54) **INSIGHT MINING USING MACHINE LEARNING**

(57)      A metric predictor model for predicting values of a data metric is selected. The metric predictor model is trained using historical data related to the data metric. A predicted value of the data metric is obtained using the metric predictor model. A current value of the data metric is obtained using data other than the historical data. A difference between the predicted value and the current value is determined to meet a reporting criterion. In response to determining that the difference meets the reporting criterion, a notification descriptive of the difference is output.

**EP 4 318 265 A1**

**Description**

BACKGROUND

Advances in computer storage and database technology have led to exponential growth of the amount of data being created. Businesses are overwhelmed by the volume of the data stored in their computer systems. Existing database analytic tools are inefficient, costly to utilize, and require substantial configuration and training.

SUMMARY

A first aspect is a method that includes selecting a metric predictor model for predicting values of a data metric, the metric predictor model trained using historical data related to the data metric; obtaining a predicted value of the data metric using the metric predictor model; obtaining a current value of the data metric using data other than the historical data; determining that a difference between the predicted value and the current value meets a reporting criterion; and, in response to determining that the difference meets the reporting criterion, outputting a notification descriptive of the difference.

A second aspect is a device that includes a memory and a processor. The processor is configured to execute instructions stored in the memory to select a metric predictor model for predicting values of a data metric, the metric predictor model trained using historical data related to the data metric; obtain a predicted value of the data metric using the metric predictor model; obtain a current value of the data metric using data other than the historical data; determine that a difference between the predicted value and the current value meets a reporting criterion; and, in response to determining that the difference meets the reporting criterion, output a notification descriptive of the difference.

A third aspect is a non-transitory computer readable medium that stores instructions operable to cause one or more processors to perform operations that include selecting a metric predictor model for predicting values of a data metric, the metric predictor model trained using historical data related to the data metric; obtaining a predicted value of the data metric using the metric predictor model; obtaining a current value of the data metric using data other than the historical data; determining that a difference between the predicted value and the current value meets a reporting criterion; and, in response to determining that the difference meets the reporting criterion, outputting a notification descriptive of the difference.

BRIEF DESCRIPTION OF THE DRAWINGS

The disclosure is best understood from the following detailed description when read in conjunction with the accompanying drawings. It is emphasized that, according to common practice, the various features of the drawings are not to scale. On the contrary, the dimensions of the various features are arbitrarily expanded or reduced for clarity.

FIG. 1 is a block diagram of an example of a computing device.
FIG. 2 is a block diagram of an example of a computing system.
FIG. 3 is a block diagram of an example of a low-latency data access and analysis system.
FIG. 4 is a block diagram of an example of a server 4000 for insight mining using machine learning.
FIG. 5 is a block diagram of example functionality of an insight software.
FIG. 6 is a flowchart of an example of a technique of insight mining using machine learning.

DETAILED DESCRIPTION

Businesses and other organizations store large amounts of data, such as business records, transaction records, and the like, in data storage systems, such as relational database systems that store data as records, or rows, having values, or fields, corresponding to respective columns in tables that can be interrelated using key values. Databases structures are often normalized or otherwise organized to maximize data density and to maximize transactional data operations at the expense of increased complexity and reduced accessibility for analysis. Individual records and tables may have little or no utility without substantial correlation, interpretation, and analysis. The complexity of these data structures and the large volumes of data that can be stored therein limit the accessibility of the data and require substantial skilled human resources to code procedures and tools that allow business users to access useful data. The tools that are available for accessing these systems are limited to outputting data expressly requested by the users and lack the capability to identify and prioritize data other than the data expressly requested. Useful data, such as data aggregations, patterns, and statistical anomalies that would not be available in smaller data sets (e.g., 10,000 rows of data), and may not be apparent to human users, may be derivable using the large volume of data (e.g., millions or billions of rows) stored in complex data storage systems, such as relational database systems, and may be inaccessible due to the complexity and limitations of the data storage systems.

The machine learning techniques disclosed herein improve the efficiency, resource utilization, and accessibility of data storage, access, and analysis systems by automatically identifying and prioritizing data, to create, generate, or surface useful data and information about data, such as trends, patterns, and anomalies, that otherwise would be inaccessible or unknown, such as based on structures or relationships within the data that may be otherwise imperceptible.

Identifying data equivalent to the insights described herein, by users, may consume a significant amount of trial-and-error and compute resources to generate and execute custom programs (e.g., queries) that attempt to identify such data. Furthermore, some data equivalent to the insights described herein may not be surfaced by trial-and-error analyses.

Implementations of the low-latency data access and analysis system described in this disclosure can identify insights for a data metric from new data related to the data metric by using machine-learning (ML) models that are trained on at least a subset of historical data related to the data metric. The subset of the historical data related to the data metric may be obtained by sampling the historical data. A time series of the data metric may be obtained (e.g., generated, determined, constructed etc.) from the historical data, or the subset thereof. A time series is a series of data points, such as values of the data metric, in temporal order. The ML models are trained using the time series. An insight may be identified based on a difference between a predicted (e.g., forecasted) value of the data metric (as obtained from an ML model) and a current value (e.g., an actual value) of the data metric (as obtained from new data) where the difference exceeds a reporting criterion (e.g., a threshold). An insight can be reported (e.g., a notification or alert therefor is output), such as to a user.

The ML models can be adapted to new data, such as periodically or on an ad-hoc basis. For example, when an ML model does not generate (e.g., output, produce, etc.) predictions that are consistent with the new data, such as for a pre-determined number of predictions, then the ML model may be retrained.

In some implementations, patterns of causality between dimensions and data metrics can be used to identify change contributors. A change contributor can be defined as a dimension (e.g., an attribute) a change in which results in (e.g., causes, is correlated with, or accounts for), at least partially, the change (i.e., insight) in the data metric. One or more change contributors may be identified and output to the user.

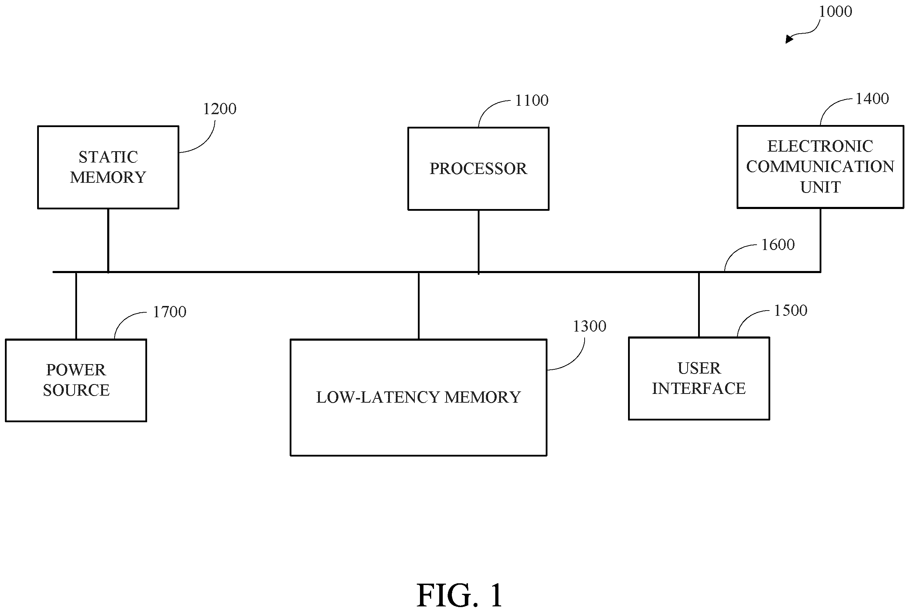

FIG. 1 is a block diagram of an example of a computing device 1000. One or more aspects of this disclosure may be implemented using the computing device 1000. The computing device 1000 includes a processor 1100, static memory 1200, low-latency memory 1300, an electronic communication unit 1400, a user interface 1500, a bus 1600, and a power source 1700. Although shown as a single unit, any one or more element of the computing device 1000 may be integrated into any number of separate physical units. For example, the low-latency memory 1300 and the processor 1100 may be integrated in a first physical unit and the user interface 1500 may be integrated in a second physical unit. Although not shown in FIG. 1, the computing device 1000 may include other aspects, such as an enclosure or one or more sensors.

The computing device 1000 may be a stationary computing device, such as a personal computer (PC), a server, a workstation, a minicomputer, or a mainframe computer; or a mobile computing device, such as a mobile telephone, a personal digital assistant (PDA), a laptop, or a tablet PC.

The processor 1100 may include any device or combination of devices capable of manipulating or processing a signal or other information, including optical processors, quantum processors, molecular processors, or a combination thereof. The processor 1100 may be a central processing unit (CPU), such as a microprocessor, and may include one or more processing units, which may respectively include one or more processing cores. The processor 1100 may include multiple interconnected processors. For example, the multiple processors may be hardwired or networked, including wirelessly networked. In some implementations, the operations of the processor 1100 may be distributed across multiple physical devices or units that may be coupled directly or across a network. In some implementations, the processor 1100 may include a cache, or cache memory, for internal storage of operating data or instructions. The processor 1100 may include one or more special purpose processors, one or more digital signal processor (DSP), one or more microprocessors, one or more controllers, one or more microcontrollers, one or more integrated circuits, one or more an Application Specific Integrated Circuits, one or more Field Programmable Gate Array, one or more programmable logic arrays, one or more programmable logic controllers, firmware, one or more state machines, or any combination thereof.

The processor 1100 may be operatively coupled with the static memory 1200, the low-latency memory 1300, the electronic communication unit 1400, the user interface 1500, the bus 1600, the power source 1700, or any combination thereof. The processor may execute, which may include controlling, such as by sending electronic signals to, receiving electronic signals from, or both, the static memory 1200, the low-latency memory 1300, the electronic communication unit 1400, the user interface 1500, the bus 1600, the power source 1700, or any combination thereof to execute, instructions, programs, code, applications, or the like, which may include executing one or more aspects of an operating system, and which may include executing one or more instructions to perform one or more aspects described herein, alone or in combination with one or more other processors.

The static memory 1200 is coupled to the processor 1100 via the bus 1600 and may include non-volatile memory, such as a disk drive, or any form of non-volatile memory capable of persistent electronic information storage, such as in the absence of an active power supply. Although shown as a single block in FIG. 1, the static memory 1200 may be implemented as multiple logical or physical units.

The static memory 1200 may store executable instructions or data, such as application data, an operating system, or a combination thereof, for access by the processor 1100. The executable instructions may be organized into programmable modules or algorithms, functional programs, codes, code segments, or combinations thereof to perform one or more aspects, features, or elements described herein. The application data may include, for example, user files, database catalogs, configuration information, or a combination thereof. The operating system may be, for example, a desktop or laptop operating system; an operating system for a mobile device, such as a smartphone or tablet device; or an operating system for a large device, such as a mainframe computer.

The low-latency memory 1300 is coupled to the processor 1100 via the bus 1600 and may include any storage medium with low-latency data access including, for example, DRAM modules such as DDR SDRAM, Phase-Change Memory (PCM), flash memory, or a solid-state drive. Although shown as a single block in FIG. 1, the low-latency memory 1300 may be implemented as multiple logical or physical units. Other configurations may be used. For example, low-latency memory 1300, or a portion thereof, and processor 1100 may be combined, such as by using a system on a chip design.

The low-latency memory 1300 may store executable instructions or data, such as application data for low-latency access by the processor 1100. The executable instructions may include, for example, one or more application programs, that may be executed by the processor 1100. The executable instructions may be organized into programmable modules or algorithms, functional programs, codes, code segments, and/or combinations thereof to perform various functions described herein.

The low-latency memory 1300 may be used to store data that is analyzed or processed using the systems or methods described herein. For example, storage of some or all data in low-latency memory 1300 instead of static memory 1200 may improve the execution speed of the systems and methods described herein by permitting access to data more quickly by an order of magnitude or greater (e.g., nanoseconds instead of microseconds).

The electronic communication unit 1400 is coupled to the processor 1100 via the bus 1600. The electronic communication unit 1400 may include one or more transceivers. The electronic communication unit 1400 may, for example, provide a connection or link to a network via a network interface. The network interface may be a wired network interface, such as Ethernet, or a wireless network interface. For example, the computing device 1000 may communicate with other devices via the electronic communication unit 1400 and the network interface using one or more network protocols, such as Ethernet, Transmission Control Protocol/Internet Protocol (TCP/ IP), power line communication (PLC), Wi-Fi, infrared, ultra violet (UV), visible light, fiber optic, wire line, general packet radio service (GPRS), Global System for Mobile communications (GSM), code-division multiple access (CDMA), Long-Term Evolution (LTE), or other suitable protocols.

The user interface 1500 may include any unit capable of interfacing with a human user, such as a virtual or physical keypad, a touchpad, a display, a touch display, a speaker, a microphone, a video camera, a sensor, a printer, or any combination thereof. For example, a keypad can convert physical input of force applied to a key to an electrical signal that can be interpreted by computing device 1000. In another example, a display can convert electrical signals output by computing device 1000 to light. The purpose of such devices may be to permit interaction with a human user, for example by accepting input from the human user and providing output back to the human user. The user interface 1500 may include a display; a positional input device, such as a mouse, touchpad, touchscreen, or the like; a keyboard; or any other human and machine interface device. The user interface 1500 may be coupled to the processor 1100 via the bus 1600. In some implementations, the user interface 1500 can include a display, which can be a liquid crystal display (LCD), a cathode-ray tube (CRT), a light emitting diode (LED) display, an organic light emitting diode (OLED) display, an active-matrix organic light emitting diode (AMOLED), or other suitable display. In some implementations, the user interface 1500, or a portion thereof, may be part of another computing device (not shown). For example, a physical user interface, or a portion thereof, may be omitted from the computing device 1000 and a remote or virtual interface may be used, such as via the electronic communication unit 1400.

The bus 1600 is coupled to the static memory 1200, the low-latency memory 1300, the electronic communication unit 1400, the user interface 1500, and the power source 1700. Although a single bus is shown in FIG. 1, the bus 1600 may include multiple buses, which may be connected, such as via bridges, controllers, or adapters.

The power source 1700 provides energy to operate the computing device 1000. The power source 1700 may be a general-purpose alternating-current (AC) electric power supply, or power supply interface, such as an interface to a household power source. In some implementations, the power source 1700 may be a single use battery or a rechargeable battery to allow the computing device 1000 to operate independently of an external power distribution system. For example, the power source 1700 may include a wired power source; one or more dry cell batteries, such as nickel-cadmium (NiCad), nickel-zinc (NiZn), nickel metal hydride (NiMH), lithium-ion (Li-ion); solar cells; fuel cells; or any other device capable of powering the computing device 1000.

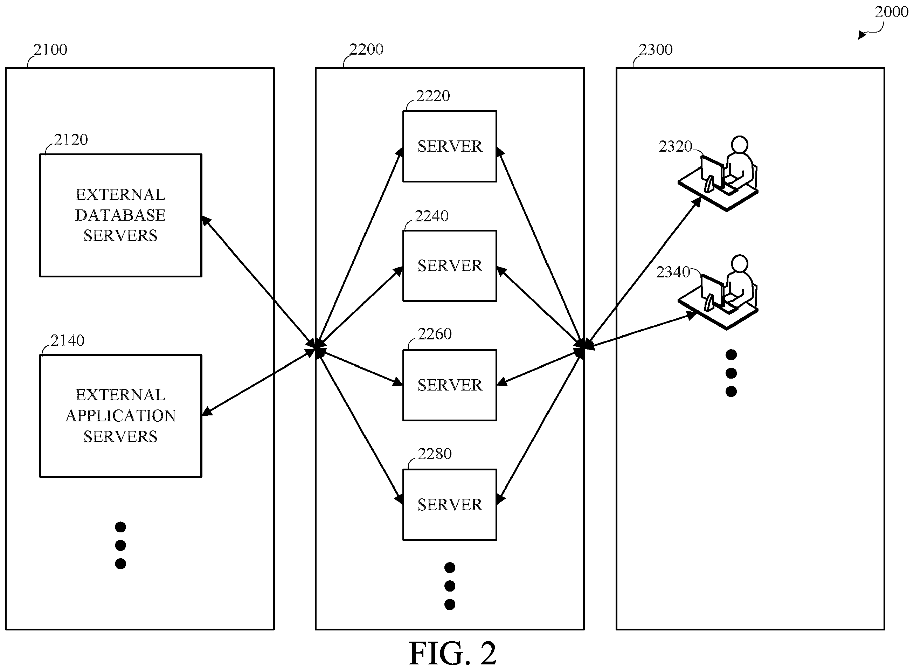

FIG. 2 is a block diagram of an example of a computing system 2000. As shown, the computing system 2000 includes an external data source portion 2100, an internal database analysis portion 2200, and a system interface portion 2300. The computing system 2000 may include other elements not shown in FIG. 2, such as computer network elements.

The external data source portion 2100 may be associated with, such as controlled by, an external person, entity, or organization (second party). The internal database analysis portion 2200 may be associated with, such as created by or controlled by, a person, entity, or organization (first party). The system interface portion 2300 may be associated with, such as created by or controlled by, the first party and may be accessed by the first party, the second party, third parties, or a combination thereof, such as in accordance with access and authorization permissions and procedures.

The external data source portion 2100 is shown as including external database servers 2120 and external application servers 2140. The external data source portion 2100 may include other elements not shown in FIG. 2. The external data source portion 2100 may include external computing devices, such as the computing device 1000 shown in FIG. 1, which may be used by or accessible to the external person, entity, or organization (second party) associated with the external data source portion 2100, including but not limited to external database servers 2120 and external application servers 2140. The external computing devices may include data regarding the operation of the external person, entity, or organization (second party) associated with the external data source portion 2100.

The external database servers 2120 may be one or more computing devices configured to store data in a format and schema determined externally from the internal database analysis portion 2200, such as by a second party associated with the external data source portion 2100, or a third party. For example, the external database server 2120 may use a relational database and may include a database catalog with a schema. In some embodiments, the external database server 2120 may include a non-database data storage structure, such as a text-based data structure, such as a comma separated variable structure or an extensible markup language formatted structure or file. For example, the external database servers 2120 can include data regarding the production of materials by the external person, entity, or organization (second party) associated with the external data source portion 2100, communications between the external person, entity, or organization (second party) associated with the external data source portion 2100 and third parties, or a combination thereof. Other data may be included. The external database may be a structured database system, such as a relational database operating in a relational database management system (RDBMS), which may be an enterprise database. In some embodiments, the external database may be an unstructured data source. The external data may include data or content, such as sales data, revenue data, profit data, tax data, shipping data, safety data, sports data, health data, meteorological data, or the like, or any other data, or combination of data, that may be generated by or associated with a user, an organization, or an enterprise and stored in a database system. For simplicity and clarity, data stored in or received from the external data source portion 2100 may be referred to herein as enterprise data.

The external application server 2140 may include application software, such as application software used by the external person, entity, or organization (second party) associated with the external data source portion 2100. The external application server 2140 may include data or metadata relating to the application software.

The external database servers 2120, the external application servers 2140, or both, shown in FIG. 2 may represent logical units or devices that may be implemented on one or more physical units or devices, which may be controlled or operated by the first party, the second party, or a third party.

The external data source portion 2100, or aspects thereof, such as the external database servers 2120, the external application servers 2140, or both, may communicate with the internal database analysis portion 2200, or an aspect thereof, such as one or more of the servers 2220, 2240, 2260, and 2280, via an electronic communication medium, which may be a wired or wireless electronic communication medium. For example, the electronic communication medium may include a local area network (LAN), a wide area network (WAN), a fiber channel network, the Internet, or a combination thereof.

The internal database analysis portion 2200 is shown as including servers 2220, 2240, 2260, and 2280. The servers 2220, 2240, 2260, and 2280 may be computing devices, such as the computing device 1000 shown in FIG. 1. Although four servers 2220, 2240, 2260, and 2280 are shown in FIG. 2, other numbers, or cardinalities, of servers may be used. For example, the number of computing devices may be determined based on the capability of individual computing devices, the amount of data to be processed, the complexity of the data to be processed, or a combination thereof. Other metrics may be used for determining the number of computing devices.

The internal database analysis portion 2200 may store data, process data, or store and process data. The internal database analysis portion 2200 may include a distributed cluster (not expressly shown) which may include two or more of the servers 2220, 2240, 2260, and 2280. The operation of distributed cluster, such as the operation of the servers 2220, 2240, 2260, and 2280 individually, in combination, or both, may be managed by a distributed cluster manager. For example, the server 2220 may be the distributed cluster manager. In another example, the distributed cluster manager may be implemented on another computing device (not shown). The data and processing of the distributed cluster may be distributed among the servers 2220, 2240, 2260, and 2280, such as by the distributed cluster manager.

Enterprise data from the external data source portion 2100, such as from the external database server 2120, the external application server 2140, or both may be imported into the internal database analysis portion 2200. The external database server 2120, the external application server 2140, or both may be one or more computing devices and may communicate with the internal database analysis portion 2200 via electronic communication. The imported data may be distributed among, processed by, stored on, or a combination thereof, one or more of the servers 2220, 2240, 2260, and 2280. Importing the enterprise data may include importing or accessing the data structures of the enterprise data. Importing the enterprise data may include generating internal data, internal data structures, or both, based on the enterprise data. The internal data, internal data structures, or both may accurately represent and may differ from the enterprise data, the data structures of the enterprise data, or both. In some implementations, enterprise data from multiple external data sources may be imported into the internal database analysis portion 2200. For simplicity and clarity, data stored or used in the internal database analysis portion 2200 may be referred to herein as internal data. For example, the internal data, or a portion thereof, may represent, and may be distinct from, enterprise data imported into or accessed by the internal database analysis portion 2200.

The system interface portion 2300 may include one or more client devices 2320, 2340. The client devices 2320, 2340 may be computing devices, such as the computing device 1000 shown in FIG. 1. For example, one of the client devices 2320, 2340 may be a desktop or laptop computer and the other of the client devices 2320, 2340 may be a mobile device, smartphone, or tablet. One or more of the client devices 2320, 2340 may access the internal database analysis portion 2200. For example, the internal database analysis portion 2200 may provide one or more services, application interfaces, or other electronic computer communication interfaces, such as a web site, and the client devices 2320, 2340 may access the interfaces provided by the internal database analysis portion 2200, which may include accessing the internal data stored in the internal database analysis portion 2200.

In an example, one or more of the client devices 2320, 2340 may send a message or signal indicating a request for data, which may include a request for data analysis, to the internal database analysis portion 2200. The internal database analysis portion 2200 may receive and process the request, which may include distributing the processing among one or more of the servers 2220, 2240, 2260, and 2280, may generate a response to the request, which may include generating or modifying internal data, internal data structures, or both, and may output the response to the client device 2320, 2340 that sent the request. Processing the request may include accessing one or more internal data indexes, an internal database, or a combination thereof. The client device 2320, 2340 may receive the response, including the response data or a portion thereof, and may store, output, or both, the response, or a representation thereof, such as a representation of the response data, or a portion thereof, which may include presenting the representation via a user interface on a presentation device of the client device 2320, 2340, such as to a user of the client device 2320, 2340.

The system interface portion 2300, or aspects thereof, such as one or more of the client devices 2320, 2340, may communicate with the internal database analysis portion 2200, or an aspect thereof, such as one or more of the servers 2220, 2240, 2260, and 2280, via an electronic communication medium, which may be a wired or wireless electronic communication medium. For example, the electronic communication medium may include a local area network (LAN), a wide area network (WAN), a fiber channel network, the Internet, or a combination thereof.

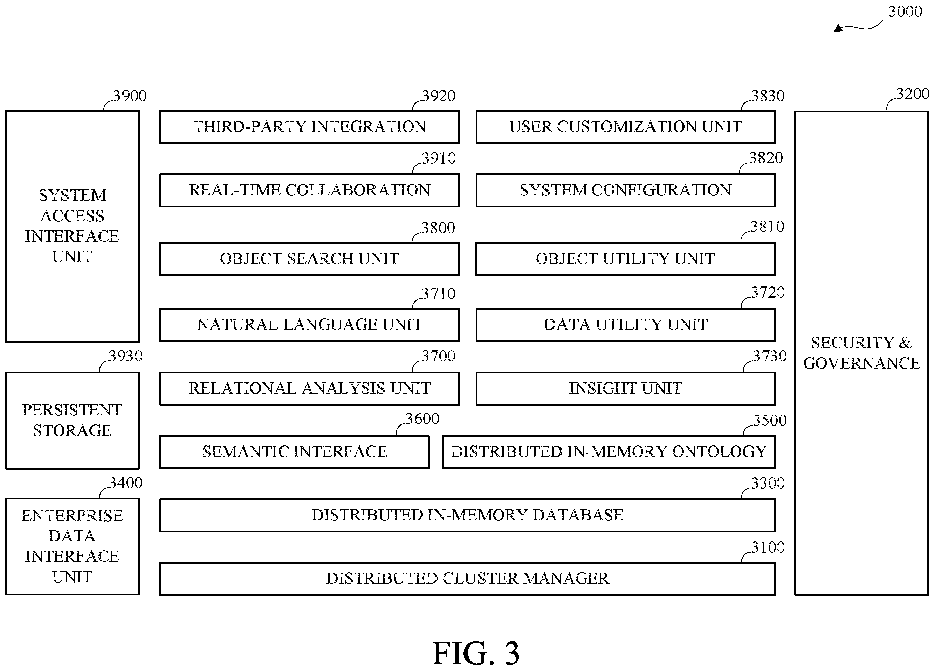

FIG. 3 is a block diagram of an example of a low-latency data access and analysis system 3000. The low-latency data access and analysis system 3000, or aspects thereof, may be similar to the internal database analysis portion 2200 shown in FIG. 2, except as described herein or otherwise clear from context. The low-latency data access and analysis system 3000, or aspects thereof, may be implemented on one or more computing devices, such as servers 2220, 2240, 2260, and 2280 shown in FIG. 2, which may be in a clustered or distributed computing configuration. As used herein, the terms "low-latency data access and analysis system," "low-latency data analysis system," and "low-latency database analysis system" indicate a computer implemented system, such as the low-latency data access and analysis system 3000 shown in FIG. 3, that obtains, stores, organizes, processes, automatically analyzes, and outputs data and visualizations thereof.

The low-latency data access and analysis system 3000, which may be a low-latency database analysis system, may store and maintain the internal data, or a portion thereof, such as low-latency data, in a low-latency memory device, such as the low-latency memory 1300 shown in FIG. 1, or any other type of data storage medium or combination of data storage devices with relatively fast (low-latency) data access, organized in a low-latency data structure. In some embodiments, the low-latency data access and analysis system 3000 may be implemented as one or more logical devices in a cloud-based configuration optimized for automatic database analysis.

As shown, the low-latency data access and analysis system 3000 includes a distributed cluster manager 3100, a security and governance unit 3200, a distributed in-memory database 3300, an enterprise data interface unit 3400, a distributed in-memory ontology unit 3500, a semantic interface unit 3600, a relational analysis unit 3700, a natural language processing unit 3710, a data utility unit 3720, an insight unit 3730, an object search unit 3800, an object utility unit 3810, a system configuration unit 3820, a user customization unit 3830, a system access interface unit 3900, a real-time collaboration unit 3910, a third-party integration unit 3920, and a persistent storage unit 3930, which may be collectively referred to as the components of the low-latency data access and analysis system 3000.

Although not expressly shown in FIG. 3, one or more of the components of the low-latency data access and analysis system 3000 may be implemented on one or more operatively connected physical or logical computing devices, such as in a distributed cluster computing configuration, such as the internal database analysis portion 2200 shown in FIG. 2. Although shown separately in FIG. 3, one or more of the components of the low-latency data access and analysis system 3000, or respective aspects thereof, may be combined or otherwise organized.

The low-latency data access and analysis system 3000 may include different, fewer, or additional components not shown in FIG. 3. The aspects or components implemented in an instance of the low-latency data access and analysis system 3000 may be configurable. For example, the insight unit 3730 may be omitted or disabled. One or more of the components of the low-latency data access and analysis system 3000 may be implemented in a manner such that aspects thereof are divided or combined into various executable modules or libraries in a manner which may differ from that described herein.

The low-latency data access and analysis system 3000 may implement an application programming interface (API), which may monitor, receive, or both, input signals or messages from external devices and systems, client systems, process received signals or messages, transmit corresponding signals or messages to one or more of the components of the low-latency data access and analysis system 3000, and output, such as transmit or send, output messages or signals to respective external devices or systems. The low-latency data access and analysis system 3000 may be implemented in a distributed computing configuration.

The distributed cluster manager 3100 manages the operative configuration of the low-latency data access and analysis system 3000. Managing the operative configuration of the low-latency data access and analysis system 3000 may include controlling the implementation of and distribution of processing and storage across one or more logical devices operating on one or more physical devices, such as the servers 2220, 2240, 2260, and 2280 shown in FIG. 2. The distributed cluster manager 3100 may generate and maintain configuration data for the low-latency data access and analysis system 3000, such as in one or more tables, identifying the operative configuration of the low-latency data access and analysis system 3000. For example, the distributed cluster manager 3100 may automatically update the low-latency data access and analysis system configuration data in response to an operative configuration event, such as a change in availability or performance for a physical or logical unit of the low-latency data access and analysis system 3000. One or more of the component units of low-latency data access and analysis system 3000 may access the data analysis system configuration data, such as to identify intercommunication parameters or paths.

The security and governance unit 3200 may describe, implement, enforce, or a combination thereof, rules and procedures for controlling access to aspects of the low-latency data access and analysis system 3000, such as the internal data of the low-latency data access and analysis system 3000 and the features and interfaces of the low-latency data access and analysis system 3000. The security and governance unit 3200 may apply security at an ontological level to control or limit access to the internal data of the low-latency data access and analysis system 3000, such as to columns, tables, rows, or fields, which may include using row-level security.

Although shown as a single unit in FIG. 3, the distributed in-memory database 3300 may be implemented in a distributed configuration, such as distributed among the servers 2220, 2240, 2260, and 2280 shown in FIG. 2, which may include multiple in-memory database instances. Each in-memory database instance may utilize one or more distinct resources, such as processing or low-latency memory resources, that differ from the resources utilized by the other in-memory database instances. In some embodiments, the in-memory database instances may utilize one or more shared resources, such as resources utilized by two or more in-memory database instances.

The distributed in-memory database 3300 may generate, maintain, or both, a low-latency data structure and data stored or maintained therein (low-latency data). The low-latency data may include principal data, which may represent enterprise data, such as enterprise data imported from an external enterprise data source, such as the external data source portion 2100 shown in FIG. 2. In some implementations, the distributed in-memory database 3300 may include system internal data representing one or more aspects, features, or configurations of the low-latency data access and analysis system 3000. The distributed in-memory database 3300 and the low-latency data stored therein, or a portion thereof, may be accessed using commands, messages, or signals in accordance with a defined structured query language associated with, such as implemented by, the distributed in-memory database 3300.

The low-latency data, or a portion thereof, may be organized as tables in the distributed in-memory database 3300. A table may be a data structure to organize or group the data or a portion thereof, such as related or similar data. A table may have a defined structure. For example, each table may define or describe a respective set of one or more columns.

A column may define or describe the characteristics of a discrete aspect of the data in the table. For example, the definition or description of a column may include an identifier, such as a name, for the column within the table, and one or more constraints, such as a data type, for the data corresponding to the column in the table. The definition or description of a column may include other information, such as a description of the column. The data in a table may be accessible or partitionable on a per-column basis. The set of tables, including the column definitions therein, and information describing relationships between elements, such as tables and columns, of the database may be defined or described by a database schema or design. The cardinality of columns of a table, and the definition and organization of the columns, may be defined by the database schema or design. Adding, deleting, or modifying a table, a column, the definition thereof, or a relationship or constraint thereon, may be a modification of the database design, schema, model, or structure.

The low-latency data, or a portion thereof, may be stored in the database as one or more rows or records in respective tables. Each record or row of a table may include a respective field or cell corresponding to each column of the table. A field may store a discrete data value. The cardinality of rows of a table, and the values stored therein, may be variable based on the data. Adding, deleting, or modifying rows, or the data stored therein may omit modification of the database design, schema, or structure. The data stored in respective columns may be identified or defined as measure data, dimension data, attribute data, or enterprise ontology data (e.g., metadata).

Measure data, or measure values, may include quantifiable or additive numeric values, such as integer or floating-point values, which may include numeric values indicating sizes, amounts, degrees, or the like. A column defined as representing measure values may be referred to herein as a measure or fact. A measure may be a property on which quantitative operations (e.g., sum, count, average, minimum, maximum) may be performed to calculate or determine a result or output.

Attribute data, or attribute values, may include non-quantifiable values, such as text or image data, which may indicate names and descriptions, quantifiable values designated, defined, or identified as attribute data, such as numeric unit identifiers, or a combination thereof. A column defined as including attribute values may be referred to herein as an attribute or dimension. For example, attributes may include text, identifiers, timestamps, or the like.

Enterprise ontology data may include data that defines or describes one or more aspects of the database, such as data that describes one or more aspects of the attributes, measures, rows, columns, tables, relationships, or other aspects of the data or database schema. For example, a portion of the database design, model, or schema may be represented as enterprise ontology data in one or more tables in the database.

Distinctly identifiable data in the low-latency data may be referred to herein as a data portion. For example, the low-latency data stored in the distributed in-memory database 3300 may be referred to herein as a data portion, a table from the low-latency data may be referred to herein as a data portion, a column from the low-latency data may be referred to herein as a data portion, a row or record from the low-latency data may be referred to herein as a data portion, a value from the low-latency data may be referred to herein as a data portion, a relationship defined in the low-latency data may be referred to herein as a data portion, enterprise ontology data describing the low-latency data may be referred to herein as a data portion, or any other distinctly identifiable data, or combination thereof, from the low-latency data may be referred to herein as a data portion.

The distributed in-memory database 3300 may create or add one or more data portions, such as a table, may read from or access one or more data portions, may update or modify one or more data portions, may remove or delete one or more data portions, or a combination thereof. Adding, modifying, or removing data portions may include changes to the data model of the low-latency data. Changing the data model of the low-latency data may include notifying one or more other components of the low-latency data access and analysis system 3000, such as by sending, or otherwise making available, a message or signal indicating the change. For example, the distributed in-memory database 3300 may create or add a table to the low-latency data and may transmit or send a message or signal indicating the change to the semantic interface unit 3600.

In some implementations, a portion of the low-latency data may represent a data model of an external enterprise database and may omit the data stored in the external enterprise database, or a portion thereof. For example, prioritized data may be cached in the distributed in-memory database 3300 and the other data may be omitted from storage in the distributed in-memory database 3300, which may be stored in the external enterprise database. In some implementations, requesting data from the distributed in-memory database 3300 may include requesting the data, or a portion thereof, from the external enterprise database.

The distributed in-memory database 3300 may receive one or more messages or signals indicating respective data-queries for the low-latency data, or a portion thereof, which may include data-queries for modified, generated, or aggregated data generated based on the low-latency data, or a portion thereof. For example, the distributed in-memory database 3300 may receive a data-query from the semantic interface unit 3600, such as in accordance with a request for data. The data-queries received by the distributed in-memory database 3300 may be agnostic to the distributed configuration of the distributed in-memory database 3300. A data-query, or a portion thereof, may be expressed in accordance with the defined structured query language implemented by the distributed in-memory database 3300. In some implementations, a data-query, or a portion thereof, may be expressed in accordance with a defined structured query language implemented by a defined database other than the distributed in-memory database 3300, such as an external database. In some implementations, a data-query may be included, such as stored or communicated, in a data-query data structure or container.

The distributed in-memory database 3300 may execute or perform one or more queries to generate or obtain response data responsive to the data-query based on the low-latency data. Unless expressly described, or otherwise clear from context, descriptions herein of a table in the context of performing, processing, or executing a data-query that include accessing, such as reading, writing, or otherwise using, a table, or data from a table, may refer to a table stored, or otherwise maintained, in the distributed in-memory database independently of the data-query or may refer to tabular data obtained, such as generated, in accordance with the data-query.

The distributed in-memory database 3300 may interpret, evaluate, or otherwise process a data-query to generate one or more distributed-queries, which may be expressed in accordance with the defined structured query language. For example, an in-memory database instance of the distributed in-memory database 3300 may be identified as a query coordinator. The query coordinator may generate a query plan, which may include generating one or more distributed-queries, based on the received data-query. The query plan may include query execution instructions for executing one or more queries, or one or more portions thereof, based on the received data-query by the one or more of the in-memory database instances. Generating the query plan may include optimizing the query plan. The query coordinator may distribute, or otherwise make available, the respective portions of the query plan, as query execution instructions, to the corresponding in-memory database instances.

The respective in-memory database instances may receive the corresponding query execution instructions from the query coordinator. The respective in-memory database instances may execute the corresponding query execution instructions to obtain, process, or both, data (intermediate results data) from the low-latency data. The respective in-memory database instances may output, or otherwise make available, the intermediate results data, such as to the query coordinator.

The query coordinator may execute a respective portion of query execution instructions (allocated to the query coordinator) to obtain, process, or both, data (intermediate results data) from the low-latency data. The query coordinator may receive, or otherwise access, the intermediate results data from the respective in-memory database instances. The query coordinator may combine, aggregate, or otherwise process, the intermediate results data to obtain results data.

In some embodiments, obtaining the intermediate results data by one or more of the in-memory database instances may include outputting the intermediate results data to, or obtaining intermediate results data from, one or more other in-memory database instances, in addition to, or instead of, obtaining the intermediate results data from the low-latency data.

The distributed in-memory database 3300 may output, or otherwise make available, the results data to the semantic interface unit 3600.

The enterprise data interface unit 3400 may interface with, or communicate with, an external enterprise data system. For example, the enterprise data interface unit 3400 may receive or access enterprise data from or in an external system, such as an external database. The enterprise data interface unit 3400 may import, evaluate, or otherwise process the enterprise data to populate, create, or modify data stored in the low-latency data access and analysis system 3000. The enterprise data interface unit 3400 may receive, or otherwise access, the enterprise data from one or more external data sources, such as the external data source portion 2100 shown in FIG. 2, and may represent the enterprise data in the low-latency data access and analysis system 3000 by importing, loading, or populating the enterprise data as principal data in the distributed in-memory database 3300, such as in one or more low-latency data structures. The enterprise data interface unit 3400 may implement one or more data connectors, which may transfer data between, for example, the external data source and the distributed in-memory database 3300, which may include altering, formatting, evaluating, or manipulating the data.

The enterprise data interface unit 3400 may receive, access, or generate metadata that identifies one or more parameters or relationships for the principal data, such as based on the enterprise data, and may include the generated metadata in the low-latency data stored in the distributed in-memory database 3300. For example, the enterprise data interface unit 3400 may identify characteristics of the principal data such as, attributes, measures, values, unique identifiers, tags, links, keys, or the like, and may include metadata representing the identified characteristics in the low-latency data stored in the distributed in-memory database 3300. The characteristics of the data can be automatically determined by receiving, accessing, processing, evaluating, or interpreting the schema in which the enterprise data is stored, which may include automatically identifying links or relationships between columns, classifying columns (e.g., using column names), and analyzing or evaluating the data.

Although not shown separately in FIG. 3, the low-latency data access and analysis system 3000 implements a canonical, or system-defined, chronometry. The system-defined chronometry defines the measurement, storage, processing, organization, scale, expression, and representation of time and temporal data in the low-latency database analysis system 3000. For example, the system-defined chronometry may correspond with a Gregorian calendar, or a defined variant thereof. The system-defined chronometry defines one or more chronometric units, which may be nominal, or named, representations of respective temporal intervals. A reference chronometric unit, such as a 'second' chronometric unit, may represent a minimal temporal interval in the low-latency database analysis system. One or more aspects of the system-defined chronometry may be defined by the operating environment of the low-latency database analysis system, such as by a hardware component, an operating system, or a combination thereof. For example, a hardware component, such as a system clock (clock circuit) may define the temporal interval of the reference chronometric unit and an operating system may define one or more other chronometric units with reference to the reference chronometric unit.

The low-latency database analysis system 3000 may define or describe one or more chronometric unit types, such as a 'minute' chronometric unit type, an 'hour' chronometric unit type, a 'day' chronometric unit type, a 'week' chronometric unit type, a 'month' chronometric unit type, a 'quarter' chronometric unit type, a 'year' chronometric unit type, or any other type of chronometric unit. A temporal point may be represented, such as stored or processed, in the low-latency database analysis system as an epoch value, which may be an integer value, such that each temporal point from the contiguous sequence of temporal points that comprises the temporal continuum corresponds with a respective epoch value. A temporal location may be represented in the low-latency database analysis system as an epoch value and may be expressed in the low-latency database analysis system using one or more chronometric units, or respective values thereof. The system-defined chronometry defines respective descriptors, such as a day-of-week-name, month-name, and the like. Data defining or describing the system-defined chronometry may be stored in the low-latency data access and analysis system as a chronometric dataset. In some implementations, the low-latency data access and analysis system may define or describe a domain-specific chronometry that differs from the system-defined chronometry. The chronometric units defined or described by the domain-specific chronometry, except for the reference chronometric unit, may differ from the chronometric units defined or described by the system-defined chronometry. Data defining or describing the domain-specific chronometry may be stored in the low-latency data access and analysis system as a chronometric dataset.

Distinctly identifiable operative data units or structures representing one or more data portions, one or more entities, users, groups, or organizations represented in the internal data, or one or more aggregations, collections, relations, analytical results, visualizations, or groupings thereof, may be represented in the low-latency data access and analysis system 3000 as objects. An object may include a unique identifier for the object, such as a fully qualified name. An object may include a name, such as a displayable value, for the object.

For example, an object may represent a user, a group, an entity, an organization, a privilege, a role, a table, a column, a data relationship, a worksheet, a view, an access context, an answer, an insight, a pinboard, a tag, a comment, a trigger, a defined variable, a data source, an object-level security rule, a row-level security rule, or any other data capable of being distinctly identified and stored or otherwise obtained in the low-latency data access and analysis system 3000. An object may represent or correspond with a logical entity. Data describing an object may include data operatively or uniquely identifying data corresponding to, or represented by, the object in the low-latency data access and analysis system. For example, a column in a table in a database in the low-latency data access and analysis system may be represented in the low-latency data access and analysis system as an object and the data describing or defining the object may include data operatively or uniquely identifying the column.

A worksheet (worksheet object), or worksheet table, may be a logical table, or a definition thereof, which may be a collection, a sub-set (such as a subset of columns from one or more tables), or both, of data from one or more data sources, such as columns in one or more tables, such as in the distributed in-memory database 3300. A worksheet, or a definition thereof, may include one or more data organization or manipulation definitions, such as join paths or worksheet-column definitions, which may be user defined. A worksheet may be a data structure that may contain one or more rules or definitions that may define or describe how a respective tabular set of data may be obtained, which may include defining one or more sources of data, such as one or more columns from the distributed in-memory database 3300. A worksheet may be a data source. For example, a worksheet may include references to one or more data sources, such as columns in one or more tables, such as in the distributed in-memory database 3300, and a request for data referencing the worksheet may access the data from the data sources referenced in the worksheet. In some implementations, a worksheet may omit aggregations of the data from the data sources referenced in the worksheet.

An answer (answer object), or report, may represent a defined, such as previously generated, request for data, such as a resolved request. An answer may include information describing a visualization of data responsive to the request for data.

A visualization (visualization object) may be a defined representation or expression of data, such as a visual representation of the data, for presentation to a user or human observer, such as via a user interface. Although described as a visual representation, in some implementations, a visualization may include non-visual aspects, such as auditory or haptic presentation aspects. A visualization may be generated to represent a defined set of data in accordance with a defined visualization type or template (visualization template object), such as in a chart, graph, or tabular form. Example visualization types may include, and are not limited to, chloropleths, cartograms, dot distribution maps, proportional symbol maps, contour/isopleth/isarithmic maps, daysymetric map, self-organizing map, timeline, time series, connected scatter plots, Gantt charts, steam graph/theme river, arc diagrams, polar area/rose/circumplex charts, Sankey diagrams, alluvial diagrams, pie charts, histograms, tag clouds, bubble charts, bubble clouds, bar charts, radial bar charts, tree maps, scatter plots, line charts, step charts, area charts, stacked graphs, heat maps, parallel coordinates, spider charts, box and whisker plots, mosaic displays, waterfall charts, funnel charts, or radial tree maps. A visualization template may define or describe one or more visualization parameters, such as one or more color parameters. Visualization data for a visualization may include values of one or more of the visualization parameters of the corresponding visualization template.

A view (view object) may be a logical table, or a definition thereof, which may be a collection, a sub-set, or both, of data from one or more data sources, such as columns in one or more tables, such as in the distributed in-memory database 3300. For example, a view may be generated based on an answer, such as by storing the answer as a view. A view may define or describe a data aggregation. A view may be a data source. For example, a view may include references to one or more data sources, such as columns in one or more tables, such as in the distributed in-memory database 3300, which may include a definition or description of an aggregation of the data from a respective data source, and a request for data referencing the view may access the aggregated data, the data from the unaggregated data sources referenced in the worksheet, or a combination thereof. The unaggregated data from data sources referenced in the view defined or described as aggregated data in the view may be unavailable based on the view. A view may be a materialized view or an unmaterialized view. A request for data referencing a materialized view may obtain data from a set of data previously obtained (view-materialization) in accordance with the definition of the view and the request for data. A request for data referencing an unmaterialized view may obtain data from a set of data currently obtained in accordance with the definition of the view and the request for data.

A pinboard (pinboard object), or dashboard, may be a defined collection or grouping of objects, such as visualizations, answers, or insights. Pinboard data for a pinboard may include information associated with the pinboard, which may be associated with respective objects included in the pinboard.

An access context (access-context object) may be a set or collection of data associated with, such as including, data expressing usage intent, such as a request for data, data responsive to data expressing usage intent, or a discretely related sequence or series of requests for data or other interactions with the low-latency data access and analysis system 3000, and a corresponding data structure for containing such data. For example, data expressing usage intent may be generated by the low-latency data access and analysis system 3000, or a component thereof, such as the system access interface unit 3900, such as in response to input, such as user input, obtained by the low-latency data access and analysis system 3000. In another example, data expressing usage intent may be obtained, received, or otherwise accessed, by the low-latency data access and analysis system 3000, or a component thereof, from an external device or system.

A definition may be a set of data describing the structure or organization of a data portion. For example, in the distributed in-memory database 3300, a column definition may define one or more aspects of a column in a table, such as a name of the column, a description of the column, a datatype for the column, or any other information about the column that may be represented as discrete data.

A data source object may represent a source or repository of data accessible by the low-latency data access and analysis system 3000. A data source object may include data indicating an electronic communication location, such as an address, of a data source, connection information, such as protocol information, authentication information, or a combination thereof, or any other information about the data source that may be represented as discrete data. For example, a data source object may represent a table in the distributed in-memory database 3300 and include data for accessing the table from the database, such as information identifying the database, information identifying a schema within the database, and information identifying the table within the schema within the database. A data source object (external data source object) may represent an external data source. For example, an external data source object may include data indicating an electronic communication location, such as an address, of an external data source, connection information, such as protocol information, authentication information, or a combination thereof, or any other information about the external data source that may be represented as discrete data.

A sticker (sticker object) may be a description of a classification, category, tag, subject area, or other information that may be associated with one or more other objects such that objects associated with a sticker may be grouped, sorted, filtered, or otherwise identified based on the sticker. In the distributed in-memory database 3300 a tag may be a discrete data portion that may be associated with other data portions, such that data portions associated with a tag may be grouped, sorted, filtered, or otherwise identified based on the tag.

The distributed in-memory ontology unit 3500 generates, maintains, or both, information (ontological data) defining or describing the operative ontological structure of the objects represented in the low-latency data access and analysis system 3000, such as in the low-latency data stored in the distributed in-memory database 3300, which may include describing attributes, properties, states, or other information about respective objects and may include describing relationships among respective objects.

Objects may be referred to herein as primary objects, secondary objects, or tertiary objects. Other types of objects may be used.

Primary objects may include objects representing distinctly identifiable operative data units or structures representing one or more data portions in the distributed in-memory database 3300, or another data source in the low-latency data access and analysis system 3000. For example, primary objects may be data source objects, table objects, column objects, relationship objects, or the like. Primary objects may include worksheets, views, filters, such as row-level-security filters and table filters, variables, or the like. Primary objects may be referred to herein as data-objects or queryable-objects.

Secondary objects may be objects representing distinctly identifiable operative data units or structures representing analytical data aggregations, collections, analytical results, visualizations, or groupings thereof, such as pinboard objects, answer objects, insights, visualization objects, resolved-request objects, and the like. Secondary objects may be referred to herein as analytical-objects.

Tertiary objects may be objects representing distinctly identifiable operative data units or structures representing operational aspects of the low-latency data access and analysis system 3000, such as one or more entities, users, groups, or organizations represented in the internal data, such as user objects, user-group objects, role objects, sticker objects, and the like.

The distributed in-memory ontology unit 3500 may represent the ontological structure, which may include the objects therein, as a graph having nodes and edges. A node may be a representation of an object in the graph structure of the distributed in-memory ontology unit 3500. Anode, representing an object, can include one or more components. The components of a node may be versioned, such as on a per-component basis. For example, a node can include a header component, a content component, or both. A header component may include information about the node. A content component may include the content of the node. An edge may represent a relationship between nodes, which may be directional.

In some implementations, the distributed in-memory ontology unit 3500 graph may include one or more nodes, edges, or both, representing one or more objects, relationships or both, corresponding to a respective internal representation of enterprise data stored in an external enterprise data storage unit, wherein a portion of the data stored in the external enterprise data storage unit represented in the distributed in-memory ontology unit 3500 graph is omitted from the distributed in-memory database 3300.

In some embodiments, the distributed in-memory ontology unit 3500 may generate, modify, or remove a portion of the ontology graph in response to one or more messages, signals, or notifications from one or more of the components of the low-latency data access and analysis system 3000. For example, the distributed in-memory ontology unit 3500 may generate, modify, or remove a portion of the ontology graph in response to receiving one or more messages, signals, or notifications from the distributed in-memory database 3300 indicating a change to the low-latency data structure. In another example, the distributed in-memory database 3300 may send one or more messages, signals, or notifications indicating a change to the low-latency data structure to the semantic interface unit 3600 and the semantic interface unit 3600 may send one or more messages, signals, or notifications indicating the change to the low-latency data structure to the distributed in-memory ontology unit 3500.

The distributed in-memory ontology unit 3500 may be distributed, in-memory, multi-versioned, transactional, consistent, durable, or a combination thereof. The distributed in-memory ontology unit 3500 is transactional, which may include implementing atomic concurrent, or substantially concurrent, updating of multiple objects. The distributed in-memory ontology unit 3500 is durable, which may include implementing a robust storage that prevents data loss subsequent to or as a result of the completion of an atomic operation. The distributed in-memory ontology unit 3500 is consistent, which may include performing operations associated with a request for data with reference to or using a discrete data set, which may mitigate or eliminate the risk inconsistent results.

The distributed in-memory ontology unit 3500 may generate, output, or both, one or more event notifications. For example, the distributed in-memory ontology unit 3500 may generate, output, or both, a notification, or notifications, in response to a change of the distributed in-memory ontology. The distributed in-memory ontology unit 3500 may identify a portion of the distributed in-memory ontology (graph) associated with a change of the distributed in-memory ontology, such as one or more nodes depending from a changed node, and may generate, output, or both, a notification, or notifications indicating the identified relevant portion of the distributed in-memory ontology (graph). One or more aspects of the low-latency data access and analysis system 3000 may cache object data and may receive the notifications from the distributed in-memory ontology unit 3500, which may reduce latency and network traffic relative to systems that omit caching object data or omit notifications relevant to changes to portions of the distributed in-memory ontology (graph).

The distributed in-memory ontology unit 3500 may implement prefetching. For example, the distributed in-memory ontology unit 3500 may predictively, such as based on determined probabilistic utility, fetch one or more nodes, such as in response to access to a related node by a component of the low-latency data access and analysis system 3000.

The distributed in-memory ontology unit 3500 may implement a multi-version concurrency control graph data storage unit. Each node, object, or both, may be versioned. Changes to the distributed in-memory ontology may be reversible. For example, the distributed in-memory ontology may have a first state prior to a change to the distributed in-memory ontology, the distributed in-memory ontology may have a second state subsequent to the change, and the state of the distributed in-memory ontology may be reverted to the first state subsequent to the change, such as in response to the identification of an error or failure associated with the second state.

In some implementations, reverting a node, or a set of nodes, may omit reverting one or more other nodes. In some implementations, the distributed in-memory ontology unit 3500 may maintain a change log indicating a sequential record of changes to the distributed in-memory ontology (graph), such that a change to a node or a set of nodes may be reverted and one or more other changes subsequent to the reverted change may be reverted for consistency.

The distributed in-memory ontology unit 3500 may implement optimistic locking to reduce lock contention times. The use of optimistic locking permits improved throughput of data through the distributed in-memory ontology unit 3500.

The semantic interface unit 3600 may implement procedures and functions to provide a semantic interface between the distributed in-memory database 3300 and one or more of the other components of the low-latency data access and analysis system 3000.

The semantic interface unit 3600 may implement ontological data management, data-query generation, authentication and access control, object statistical data collection, or a combination thereof.

Ontological data management may include object lifecycle management, object data persistence, ontological modifications, or the like. Object lifecycle management may include creating one or more objects, reading or otherwise accessing one or more objects, updating or modifying one or more objects, deleting or removing one or more objects, or a combination thereof. For example, the semantic interface unit 3600 may interface or communicate with the distributed in-memory ontology unit 3500, which may store the ontological data, object data, or both, to perform object lifecycle management, object data persistence, ontological modifications, or the like.

For example, the semantic interface unit 3600 may receive, or otherwise access, a message, signal, or notification, such as from the distributed in-memory database 3300, indicating the creation or addition of a data portion, such as a table, in the low-latency data stored in the distributed in-memory database 3300, and the semantic interface unit 3600 may communicate with the distributed in-memory ontology unit 3500 to create an object in the ontology representing the added data portion. The semantic interface unit 3600 may transmit, send, or otherwise make available, a notification, message, or signal to the relational analysis unit 3700 indicating that the ontology has changed.

The semantic interface unit 3600 may receive, or otherwise access, a request message or signal, such as from the relational analysis unit 3700, indicating a request for information describing changes to the ontology (ontological updates request). The semantic interface unit 3600 may generate and send, or otherwise make available, a response message or signal to the relational analysis unit 3700 indicating the changes to the ontology (ontological updates response). The semantic interface unit 3600 may identify one or more data portions for indexing based on the changes to the ontology. For example, the changes to the ontology may include adding a table to the ontology, the table including multiple rows, and the semantic interface unit 3600 may identify each row as a data portion for indexing. The semantic interface unit 3600 may include information describing the ontological changes in the ontological updates response. The semantic interface unit 3600 may include one or more data-query definitions, such as data-query definitions for indexing data-queries, for each data portion identified for indexing in the ontological updates response. For example, the data-query definitions may include a sampling data-query, which may be used to query the distributed in-memory database 3300 for sample data from the added data portion, an indexing data-query, which may be used to query the distributed in-memory database 3300 for data from the added data portion, or both.

The semantic interface unit 3600 may receive, or otherwise access, internal signals or messages including data expressing usage intent, such as data indicating requests to access or modify the low-latency data stored in the distributed in-memory database 3300 (e.g., a request for data). The request to access or modify the low-latency data received by the semantic interface unit 3600 may include a resolved request (resolved-request data), such as in a resolved-request object, such as a resolved-request object generated by the relational analysis unit 3700. The resolved request data, which may be database and visualization agnostic, may be expressed or communicated as an ordered sequence of tokens, which may represent semantic data.

The resolved-request data may include tokenization binding data. The tokenization binding data corresponding to a respective token may include, for example, one or more of a column identifier indicating a column corresponding to the respective token, a data type identifier corresponding to the respective token, a table identifier indicating a table corresponding to the respective token, an indication of an aggregation corresponding to the respective token, or an indication of a join path associated with the respective token. Other tokenization binding data may be used.

The resolved-request data may include phrasing data indicating phrasing with respect to the sequence of tokens in the resolved request, wherein tokens, such as one or more sequential tokens, are included in a respective phrase. The phrasing data may include phrase type data for respective phrases. For some tokens, or sequences of tokens, the phrasing data may indicate that the sequence of tokens corresponds with a value stored in a data source, such as in a column in a table, wherein the phrasing data includes data uniquely identifying the data source, such as a column identifier.

A token is a unit of data in the low-latency data access and analysis system 3000 that represents, in accordance with one or more defined grammars implemented by the low-latency data access and analysis system 3000, a data portion accessed by or stored in the low-latency data access and analysis system 3000, an operation of the low-latency data access and analysis system 3000, an object represented in the low-latency data access and analysis system 3000, or a class or type of data portion, operation, or object in the low-latency data access and analysis system 3000. A token may be a value (token value), such as a string value, which may be a word, a character, a sequence of characters, a symbol, a combination of symbols, or the like. In some implementations, the token value may express a data pattern that defines or describes values, operations, or objects that the token represents. For example, the data pattern expressed by the token value may identify a data type, such as positive integer, such that positive integer values, or string values that may be represented as positive integer values, may be identified as matching the token. A token may be a defined data structure (token data structure) that includes a token value. A token data structure may include data other than the token value, such as token type data.

The defined grammars implemented by the low-latency data access and analysis system 3000 may define or describe the tokens. The defined grammars implemented by the low-latency data access and analysis system 3000 may define or describe token types or classes, such as ontological tokens, control-word tokens, pattern tokens, literal tokens, chronometric tokens, and a skip-token. Other token types may be used.

An ontological token may represent a data portion in the low-latency data access and analysis system, such as an object represented in the low-latency data access and analysis system 3000, or a portion thereof, a table stored in the distributed in-memory database or stored in an external database, a column of a table stored in the distributed in-memory database or stored in an external database, or a value (constituent data) stored in a row and column of a table stored in the distributed in-memory database or stored in an external database. In some grammars implemented by the low-latency data access and analysis system 3000 the ontological tokens may include measure tokens representing measure data portions (measure columns), attribute tokens representing attribute data portions (attribute columns), and value tokens representing the respective values stored in the corresponding measure columns or attribute columns. For example, a worksheet object (analytical-object) represented in the low-latency data access and analysis system 3000 may include a column that includes values generated based on values stored in one or more tables in the distributed in-memory database, and an ontological token may represent the column of the worksheet object.

A control-word token may be a character, a symbol, a word, or a defined ordered sequence of characters or symbols, defined or described in one or more grammars of the low-latency data access and analysis system 3000 as having one or more defined grammatical functions, which may be contextual. For example, the control-word token "sum" may be defined or described in one or more grammars of the low-latency data access and analysis system 3000 as indicating an additive aggregation. In another example, the control-word token "top" may be defined or described in one or more grammars of the low-latency data access and analysis system 3000 as indicating a maximal value from an ordered set. In another example, the control-word token "table" may be defined or described in one or more grammars of the low-latency data access and analysis system 3000 as indicating a table stored in the low-latency data access and analysis system 3000 or stored externally and accessed by the low-latency data access and analysis system 3000. The control-word tokens may include operator tokens, such as the equality operator token ("="), delimiter tokens, which may be paired, such as opening and closing brackets ("[", "]"). The control-word tokens may include stop-word tokens, such as "the" or "an".

A pattern token may be a definition or a description of units of data in the low-latency data access and analysis system, which may be expressed as a data type, such as positive integer, defined or described in one or more grammars of the low-latency data access and analysis system 3000.

A literal, or constant, token may include a literal, or constant, value such as "100" or the Boolean value TRLTE. The literal, or constant, tokens may include number-word tokens (numerals or named numbers), such as number-word tokens for the positive integers between zero and one million, inclusive, or for the numerator, denominator, or both of fractional values, or combinations thereof. For example, "one hundred twenty-eight and three-fifths".

A chronometric token may represent a chronometric unit, such as a chronometric unit from the system-defined chronometry or a chronometric unit from a domain-specific chronometry defined or described in the low-latency data access and analysis system 3000. The chronometric tokens are automatically generated based on the respective chronometric datasets. For example, chronometric tokens corresponding to the chronometric units for the system-defined chronometry, such as "date", "day", "days", "daily", "week", "weeks", "weekly", "month", "months", "monthly", "quarter", "quarters", "quarterly", "year", "years", "yearly", and the like, may be automatically generated based on the chronometric dataset for the system-defined chronometry.

The skip-token may represent discrete data portions, such as respective portions of a string that are unresolvable in accordance with the other tokens defined or described in a respective grammar of the low-latency data access and analysis system 3000.

The relational analysis unit 3700 may automatically generate respective tokens representing the attributes, the measures, the tables, the columns, the values, unique identifiers, tags, links, keys, or any other data portion, or combination of data portions, or a portion thereof.

For example, the relational analysis unit 3700 may tokenize, identify semantics, or both, based on input data, such as input data representing user input, to generate the resolved request. The resolved request may include an ordered sequence of tokens that represent the request for data corresponding to the input data, and may transmit, send, or otherwise make accessible, the resolved request to the semantic interface unit 3600. The semantic interface unit 3600 may process or respond to a received resolved request.

The semantic interface unit 3600 may process or transform the received resolved request, which may be, at least in part, incompatible with the distributed in-memory database 3300, to generate one or more corresponding data-queries that are compatible with the distributed in-memory database 3300, which may include generating a proto-query representing the resolved request, generating a pseudo-query representing the proto-query, and generating the data-query representing the pseudo-query.

The semantic interface unit 3600 may generate an analytical-object, such as an answer object, representing the resolved request, which may include representing the data expressing usage intent, such as by representing the request for data indicated by the data expressing usage intent.

The semantic interface unit 3600 may generate a proto-query based on the resolved request. A proto-query, which may be database agnostic, may be structured or formatted in a form, language, or protocol that differs from the defined structured query language of the distributed in-memory database 3300. Generating the proto-query may include identifying visualization identification data, such as an indication of a type of visualization, associated with the request for data, and generating the proto-query based on the resolved request and the visualization identification data.

The semantic interface unit 3600 may transform the proto-query to generate a pseudo-query. The pseudo-query, which may be database agnostic, may be structured or formatted in a form, language, or protocol that differs from the defined structured query language of the distributed in-memory database 3300. Generating a pseudo-query may include applying a defined transformation, or an ordered sequence of transformations. Generating a pseudo-query may include incorporating row-level security filters in the pseudo-query.

The semantic interface unit 3600 may generate a data-query based on the pseudo-query, such as by serializing the pseudo-query. The data-query, or a portion thereof, may be structured or formatted using the defined structured query language of the distributed in-memory database 3300. In some implementations, a data-query may be structured or formatted using a defined structured query language of another database, which may differ from the defined structured query language of the distributed in-memory database 3300. Generating the data-query may include using one or more defined rules for expressing respective the structure and content of a pseudo-query in the respective defined structured query language.

The semantic interface unit 3600 may communicate, or issue, the data-query to the distributed in-memory database 3300. In some implementations, processing or responding to a resolved request may include generating and issuing multiple data-queries to the distributed in-memory database 3300.

The semantic interface unit 3600 may receive results data from the distributed in-memory database 3300 responsive to one or more resolved requests. The semantic interface unit 3600 may process, format, or transform the results data to obtain visualization data. For example, the semantic interface unit 3600 may identify a visualization for representing or presenting the results data, or a portion thereof, such as based on the results data or a portion thereof. For example, the semantic interface unit 3600 may identifying a bar chart visualization for results data including one measure and attribute.

Although not shown separately in FIG. 3, the semantic interface unit 3600 may include a data visualization unit. In some embodiments, the data visualization unit may be a distinct unit, separate from the semantic interface unit 3600. In some embodiments, the data visualization unit may be included in the system access interface unit 3900. The data visualization unit, the system access interface unit 3900, or a combination thereof, may generate a user interface, or one or more portions thereof. For example, data visualization unit, the system access interface unit 3900, or a combination thereof, may obtain the results data, such as the visualization data, and may generate user interface elements (visualizations) representing the results data.

The semantic interface unit 3600 may implement object-level security, row-level security, or a combination thereof. In some implementations, the security and governance unit 3200 may implement, or partially implement, the object-level security, row-level security, or a combination thereof, in combination with the semantic interface unit 3600. Object-level security may include security associated with an object, such as a table, a column, a worksheet, an answer, or a pinboard. The object-level security may include column-level security, which include user-based or group-based access control of columns of data in the low-latency data, the indexes, or both. Row-level security may include user-based or group-based access control of rows of data in the low-latency data, the indexes, or both. The semantic interface unit 3600 may implement one or more authentication procedures, access control procedures, or a combination thereof. The object-level security, row-level security, column-level security, a combination thereof, or a portion thereof, may be represented, expressed, defined, or described as access-control data. The semantic interface unit 3600, or one or more other components of the low-latency data access and analysis system 3000, may control, such as grant, restrict, or prevent, access to one or more features, functions, units of data, or combinations thereof, in accordance with the access-control data. For example, in response to a request for data that includes a user identifier, the semantic interface unit 3600, or one or more other components of the low-latency data access and analysis system 3000, may obtain access-control data for the user identifier and may obtain results data in accordance with the access-control data such that a unit of data, such as a row or a column, that is identified in the access-control data as accessible to the user identifier and is responsive to the request for data is included in the results data and such that a unit of data, such as a row or a column, that is identified in the access-control data as inaccessible to the user identifier, or for which the access-control data omits or excludes corresponding data indicating that the unit of data is accessible to the user identifier, is omitted or excluded from the results data.

The semantic interface unit 3600 may implement one or more user-data integration features. For example, the semantic interface unit 3600 may generate and output a user interface, or a portion thereof, for inputting, uploading, or importing user data, may receive user data, and may import the user data. For example, the user data may be enterprise data.

The semantic interface unit 3600 may implement object statistical data collection. Object statistical data may include, for respective objects, temporal access information, access frequency information, access recency information, access requester information, or the like. For example, the semantic interface unit 3600 may obtain object statistical data as described with respect to the data utility unit 3720, the object utility unit 3810, or both. The semantic interface unit 3600 may send, transmit, or otherwise make available, the object statistical data for data-objects to the data utility unit 3720. The semantic interface unit 3600 may send, transmit, or otherwise make available, the object statistical data for analytical-objects to the object utility unit 3810.

The semantic interface unit 3600 may implement or expose one or more services or application programming interfaces. For example, the semantic interface unit 3600 may implement one or more services for access by the system access interface unit 3900. In some implementations, one or more services or application programming interfaces may be exposed to one or more external devices or systems.

The semantic interface unit 3600 may generate and transmit, send, or otherwise communicate, one or more external communications, such as e-mail messages, such as periodically, in response to one or more events, or both. For example, the semantic interface unit 3600 may generate and transmit, send, or otherwise communicate, one or more external communications including a portable representation, such as a portable document format representation of one or more pinboards in accordance with a defined schedule, period, or interval. In another example, the semantic interface unit 3600 may generate and transmit, send, or otherwise communicate, one or more external communications in response to input data indicating an express request for a communication. In another example, the semantic interface unit 3600 may generate and transmit, send, or otherwise communicate, one or more external communications in response to one or more defined events, such as the expiration of a recency of access period for a user.

Although shown as a single unit in FIG. 3, the relational analysis unit 3700 may be implemented in a distributed configuration, which may include a primary relational analysis unit instance and one or more secondary relational analysis unit instances.

The relational analysis unit 3700 may generate, maintain, operate, or a combination thereof, one or more indexes, such as one or more of an ontological index, a constituent data index, a control-word index, a numeral index, or a constant index, based on the low-latency data stored in the distributed in-memory database 3300, the low-latency data access and analysis system 3000, or both. An index may be a defined data structure, or combination of data structures, for storing tokens, terms, or string keys, representing a set of data from one or more defined data sources in a form optimized for searching. For example, an index may be a collection of index shards. In some implementations, an index may be segmented into index segments and the index segments may be sharded into index shards. In some implementations, an index may be partitioned into index partitions, the index partitions may be segmented into index segments and the index segments may be sharded into index shards.

Generating, or building, an index may be performed to create or populate a previously unavailable index, which may be referred to as indexing the corresponding data, and may include regenerating, rebuilding, or reindexing to update or modify a previously available index, such as in response to a change in the indexed data (constituent data).

The ontological index may be an index of data (ontological data) describing the ontological structure or schema of the low-latency data access and analysis system 3000, the low-latency data stored in the distributed in-memory database 3300, or a combination thereof. For example, the ontological index may include data representing the table and column structure of the distributed in-memory database 3300. The relational analysis unit 3700 may generate, maintain, or both, the ontological index by communicating with, such as requesting ontological data from, the distributed in-memory ontology unit 3500, the semantic interface unit 3600, or both. Each record in the ontological index may correspond to a respective ontological token, such as a token that identifies a column by name.

The control-word index may be an index of a defined set of control-word tokens. For example, the control-word index may include the control-word token "sum", which may be identified in one or more grammars of the low-latency data access and analysis system 3000 as indicating an additive aggregation. The constant index may be an index of constant, or literal, tokens such as "100" or "true". The numeral index may be an index of number word tokens (or named numbers), such as number word tokens for the positive integers between zero and one million, inclusive.

The constituent data index may be an index of the constituent data values stored in the low-latency data access and analysis system 3000, such as in the distributed in-memory database 3300. The relational analysis unit 3700 may generate, maintain, or both, the constituent data index by communicating with, such as requesting data from, the distributed in-memory database 3300. For example, the relational analysis unit 3700 may send, or otherwise communicate, a message or signal to the distributed in-memory database 3300 indicating a request to perform an indexing data-query, the relational analysis unit 3700 may receive response data from the distributed in-memory database 3300 in response to the requested indexing data-query, and the relational analysis unit 3700 may generate the constituent data index, or a portion thereof, based on the response data. For example, the constituent data index may index data-objects.

An index shard may be used for token searching, such as exact match searching, prefix match searching, substring match searching, or suffix match searching. Exact match searching may include identifying tokens in the index shard that matches a defined target value. Prefix match searching may include identifying tokens in the index shard that include a prefix, or begin with a value, such as a character or string, that matches a defined target value. Substring match searching may include identifying tokens in the index shard that include a value, such as a character or string, that matches a defined target value. Suffix match searching may include identifying tokens in the index shard that include a suffix, or end with a value, such as a character or string, that matches a defined target value. In some implementations, an index shard may include multiple distinct index data structures. For example, an index shard may include a first index data structure optimized for exact match searching, prefix match searching, and suffix match searching, and a second index data structure optimized for substring match searching. Traversing, or otherwise accessing, managing, or using, an index may include identifying one or more of the index shards of the index and traversing the respective index shards. In some implementations, one or more indexes, or index shards, may be distributed, such as replicated on multiple relational analysis unit instances. For example, the ontological index may be replicated on each relational analysis unit instance.

The relational analysis unit 3700 may receive a request for data from the low-latency data access and analysis system 3000. For example, the relational analysis unit 3700 may receive data expressing usage intent indicating the request for data in response to input, such as user input, obtained via a user interface, such as a user interface generated, or partially generated, by the system access interface unit 3900, which may be a user interface operated on an external device, such as one of the client devices 2320, 2340 shown in FIG. 2. In some implementations, the relational analysis unit 3700 may receive the data expressing usage intent from the system access interface unit 3900 or from the semantic interface unit 3600. For example, the relational analysis unit 3700 may receive or access the data expressing usage intent in a request for data message or signal.

The relational analysis unit 3700 may process, parse, identify semantics, tokenize, or a combination thereof, the request for data to generate a resolved request, which may include identifying a database and visualization agnostic ordered sequence of tokens based on the data expressing usage intent. The data expressing usage intent, or request for data, may include request data, such as resolved-request data, unresolved request data, or a combination of resolved-request data and unresolved request data. The relational analysis unit 3700 may identify the resolved-request data. The relational analysis unit 3700 may identify the unresolved request data and may tokenize the unresolved request data.

Resolved-request data may be request data identified in the data expressing usage intent as resolved-request data. Each resolved-request data portion may correspond with a respective token in the low-latency data access and analysis system 3000. The data expressing usage intent may include information identifying one or more portions of the request data as resolved-request data.

Unresolved request data may be request data identified in the data expressing usage intent as unresolved request data, or request data for which the data expressing usage intent omits information identifying the request data as resolved-request data. Unresolved request data may include text or string data, which may include a character, sequence of characters, symbol, combination of symbols, word, sequence of words, phrase, or the like, for which information, such as tokenization binding data, identifying the text or string data as resolved-request data is absent or omitted from the request data. The data expressing usage intent may include information identifying one or more portions of the request data as unresolved request data. The data expressing usage intent may omit information identifying whether one or more portions of the request data are resolved-request data. The relational analysis unit 3700 may identify one or more portions of the request data for which the data expressing usage intent omits information identifying whether the one or more portions of the request data are resolved-request data as unresolved request data.

For example, the data expressing usage intent may include a request string and one or more indications that one or more portions of the request string are resolved-request data. One or more portions of the request string that are not identified as resolved-request data in the data expressing usage intent may be identified as unresolved request data. For example, the data expressing usage intent may include the request string "example text"; the data expressing usage intent may include information indicating that the first portion of the request string, "example", is resolved-request data; and the data expressing usage intent may omit information indicating that the second portion of the request string, "text", is resolved-request data.

The information identifying one or more portions of the request data as resolved-request data may include tokenization binding data indicating a previously identified token corresponding to the respective portion of the request data. The tokenization binding data corresponding to a respective token may include, for example, one or more of a column identifier indicating a column corresponding to the respective token, a data type identifier corresponding to the respective token, a table identifier indicating a table corresponding to the respective token, an indication of an aggregation corresponding to the respective token, or an indication of a join path associated with the respective token. Other tokenization binding data may be used. In some implementations, the data expressing usage intent may omit the tokenization binding data and may include an identifier that identifies the tokenization binding data.

The relational analysis unit 3700 may implement or access one or more grammar-specific tokenizers, such as a tokenizer for a defined data-analytics grammar or a tokenizer for a natural-language grammar. For example, the relational analysis unit 3700 may implement one or more of a formula tokenizer, a row-level-security tokenizer, a data-analytics tokenizer, or a natural language tokenizer. Other tokenizers may be used. In some implementations, the relational analysis unit 3700 may implement one or more of the grammar-specific tokenizers, or a portion thereof, by accessing another component of the low-latency data access and analysis system 3000 that implements the respective grammar-specific tokenizer, or a portion thereof. For example, the natural language processing unit 3710 may implement the natural language tokenizer and the relational analysis unit 3700 may access the natural language processing unit 3710 to implement natural language tokenization. In another example, the semantic interface 3600, the distributed in-memory database, or both, may implement a tokenizer for a grammar for the defined structured query language compatible with or implemented by the distributed in-memory database. In some implementations, the low-latency data access and analysis system 3000, such as the semantic interface 3600, may implement a tokenizer for a grammar for a defined structured query language compatible with or implemented by an external database.

A tokenizer, such as the data-analytics tokenizer, may parse text or string data (request string), such as string data included in a data expressing usage intent, in a defined read order, such as from left to right, such as on a character-by-character or symbol-by-symbol basis. For example, a request string may include a single character, symbol, or letter, and tokenization may include identifying one or more tokens matching, or partially matching, the input character.

Tokenization may include parsing the request string to identify one or more words or phrases. For example, the request string may include a sequence of characters, symbols, or letters, and tokenization may include parsing the sequence of characters in a defined order, such as from left to right, to identify distinct words or terms and identifying one or more tokens matching the respective words. In some implementations, word or phrase parsing may be based on one or more of a set of defined delimiters, such as a whitespace character, a punctuation character, or a mathematical operator.

The relational analysis unit 3700 may traverse one or more of the indexes to identify one or more tokens corresponding to a character, word, or phrase identified in the request string. Tokenization may include identifying multiple candidate tokens matching a character, word, or phrase identified in the request string. Candidate tokens may be ranked or ordered, such as based on probabilistic utility.

Tokenization may include match-length maximization. Match-length maximization may include ranking or ordering candidate matching tokens in descending magnitude order. For example, the longest candidate token, having the largest cardinality of characters or symbols, matching the request string, or a portion thereof, may be the highest ranked candidate token. For example, the request string may include a sequence of words or a semantic phrase, and tokenization may include identifying one or more tokens matching the input semantic phrase. In another example, the request string may include a sequence of phrases, and tokenization may include identifying one or more tokens matching the input word sequence. In some implementations, tokenization may include identifying the highest ranked candidate token for a portion of the request string as a resolved token for the portion of the request string.

The relational analysis unit 3700 may implement one or more finite state machines. For example, tokenization may include using one or more finite state machines. A finite state machine may model or represent a defined set of states and a defined set of transitions between the states. A state may represent a condition of the system represented by the finite state machine at a defined temporal point. A finite state machine may transition from a state (current state) to a subsequent state in response to input (e.g., input to the finite state machine). A transition may define one or more actions or operations that the relational analysis unit 3700 may implement. One or more of the finite state machines may be non-deterministic, such that the finite state machine may transition from a state to zero or more subsequent states.

The relational analysis unit 3700 may generate, instantiate, or operate a tokenization finite state machine, which may represent the respective tokenization grammar. Generating, instantiating, or operating a finite state machine may include operating a finite state machine traverser for traversing the finite state machine. Instantiating the tokenization finite state machine may include entering an empty state, indicating the absence of received input. The relational analysis unit 3700 may initiate or execute an operation, such as an entry operation, corresponding to the empty state in response to entering the empty state. Subsequently, the relational analysis unit 3700 may receive input data, and the tokenization finite state machine may transition from the empty state to a state corresponding to the received input data. In some embodiments, the relational analysis unit 3700 may initiate one or more data-queries in response to transitioning to or from a respective state of a finite state machine. In the tokenization finite state machine, a state may represent a possible next token in the request string. The tokenization finite state machine may transition between states based on one or more defined transition weights, which may indicate a probability of transiting from a state to a subsequent state.

The tokenization finite state machine may determine tokenization based on probabilistic path utility. Probabilistic path utility may rank or order multiple candidate traversal paths for traversing the tokenization finite state machine based on the request string. The candidate paths may be ranked or ordered based on one or more defined probabilistic path utility metrics, which may be evaluated in a defined sequence. For example, the tokenization finite state machine may determine probabilistic path utility by evaluating the weights of the respective candidate transition paths, the lengths of the respective candidate transition paths, or a combination thereof. In some implementations, the weights of the respective candidate transition paths may be evaluated with high priority relative to the lengths of the respective candidate transition paths.

In some implementations, one or more transition paths evaluated by the tokenization finite state machine may include a bound state such that the candidate tokens available for tokenization of a portion of the request string may be limited based on the tokenization of a previously tokenized portion of the request string.

Tokenization may include matching a portion of the request string to one or more token types, such as a constant token type, a column name token type, a value token type, a control-word token type, a date value token type, a string value token type, or any other token type defined by the low-latency data access and analysis system 3000. A constant token type may be a fixed, or invariant, token type, such as a numeric value. A column name token type may correspond with a name of a column in the data model. A value token type may correspond with an indexed data value. A control-word token type may correspond with a defined set of control-words. A date value token type may be similar to a control-word token type and may correspond with a defined set of control-words for describing temporal information. A string value token type may correspond with an unindexed value.

Token matching may include ordering or weighting candidate token matches based on one or more token matching metrics. Token matching metrics may include whether a candidate match is within a defined data scope, such as a defined set of tables, wherein a candidate match outside the defined data scope (out-of-scope) may be ordered or weighted lower than a candidate match within the defined data scope (in-scope). Token matching metrics may include whether, or the degree to which, a candidate match increases query complexity, such as by spanning multiple roots, wherein a candidate match that increases complexity may be ordered or weighted lower than a candidate match that does not increase complexity or increases complexity to a lesser extent. Token matching metrics may include whether the candidate match is an exact match or a partial match, wherein a candidate match that is a partial may be ordered or weighted lower than a candidate match that is an exact match. In some implementations, the cardinality of the set of partial matches may be limited to a defined value.

Token matching metrics may include a token score (TokenScore), wherein a candidate match with a relatively low token score may be ordered or weighted lower than a candidate match with a relatively high token score. The token score for a candidate match may be determined based on one or more token scoring metrics. The token scoring metrics may include a finite state machine transition weight metric (FSMScore), wherein a weight of transitioning from a current state of the tokenization finite state machine to a state indicating a candidate matching token is the finite state machine transition weight metric. The token scoring metrics may include a cardinality penalty metric (CardinalityScore), wherein a cardinality of values (e.g., unique values) corresponding to the candidate matching token is used as a penalty metric (inverse cardinality), which may reduce the token score. The token scoring metrics may include an index utility metric (IndexScore), wherein a defined utility value, such as one, associated with an object, such as a column wherein the matching token represents the column or a value from the column, is the index utility metric. In some implementations, the defined utility values may be configured, such as in response to user input, on a per object (e.g., per column) basis. The token scoring metrics may include a usage metric (UBRScore). The usage metric may be determined based on a usage based ranking index, one or more usage ranking metrics, or a combination thereof. Determining the usage metric (UBRScore) may include determining a usage boost value (UBRBoost). The token score may be determined based on a defined combination of token scoring metrics. For example, determining the token score may be expressed as the following:

$$\text{TokenScore} = \text{FSMScore} * (\text{IndexScore} + \text{UBRScore} * \text{UBRBoost}) + \text{Min}(\text{CardinalityScore}, 1).$$

Token matching may include grouping candidate token matches by match type, ranking or ordering on a per-match type basis based on token score, and ranking or ordering the match types. For example, the match types may include a first match type for exact matches (having the highest match type priority order), a second match type for prefix matches on ontological data (having a match type priority order lower than the first match type), a third match type for substring matches on ontological data and prefix matches on data values (having a match type priority order lower than the second match type), a fourth match type for substring matches on data values (having a match type priority order lower than the third match type), and a fifth match type for matches omitted from the first through fourth match types (having a match type priority order lower than the fourth match type). Other match types and match type orders may be used.

Tokenization may include ambiguity resolution. Ambiguity resolution may include token ambiguity resolution, join-path ambiguity resolution, or both. In some implementations, ambiguity resolution may cease tokenization in response to the identification of an automatic ambiguity resolution error or failure.

Token ambiguity may correspond with identifying two or more exactly matching candidate matching tokens. Token ambiguity resolution may be based on one or more token ambiguity resolution metrics. The token ambiguity resolution metrics may include using available previously resolved token matching or binding data and token ambiguity may be resolved in favor of available previously resolved token matching or binding data, other relevant tokens resolved from the request string, or both. The token ambiguity resolution may include resolving token ambiguity in favor of integer constants. The token ambiguity resolution may include resolving token ambiguity in favor of control-words, such as for tokens at the end of a request for data, such as last, that are not being edited.

Join-path ambiguity may correspond with identifying matching tokens having two or more candidate join paths. Join-path ambiguity resolution may be based on one or more join-path ambiguity resolution metrics. The join-path ambiguity resolution metrics may include using available previously resolved join-path binding data and join-path ambiguity may be resolved in favor of available previously resolved join-paths. The join-path ambiguity resolution may include favoring join paths that include in-scope objects over join paths that include out-of-scope objects. The join-path ambiguity resolution metrics may include a complexity minimization metric, which may favor a join path that omits or avoids increasing complexity over join paths that increase complexity, such as a join path that may introduce a chasm trap.

The relational analysis unit 3700 may identify a resolved request based on the request string. The resolved request, which may be database and visualization agnostic, may be expressed or communicated as an ordered sequence of tokens representing the request for data indicated by the request string. The relational analysis unit 3700 may instantiate, or generate, one or more resolved-request objects. For example, the relational analysis unit 3700 may create or store a resolved-request object corresponding to the resolved request in the distributed in-memory ontology unit 3500. The relational analysis unit 3700 may transmit, send, or otherwise make available, the resolved request to the semantic interface unit 3600.

In some implementations, the relational analysis unit 3700 may transmit, send, or otherwise make available, one or more resolved requests, or portions thereof, to the semantic interface unit 3600 in response to finite state machine transitions. For example, the relational analysis unit 3700 may instantiate a data-analysis object in response to a first transition of a finite state machine. The relational analysis unit 3700 may include a first data-analysis object instruction in the data-analysis object in response to a second transition of the finite state machine. The relational analysis unit 3700 may send the data-analysis object including the first data-analysis object instruction to the semantic interface unit 3600 in response to the second transition of the finite state machine. The relational analysis unit 3700 may include a second data-analysis object instruction in the data-analysis object in response to a third transition of the finite state machine. The relational analysis unit 3700 may send the data-analysis object including the data-analysis object instruction, or a combination of the first data-analysis object instruction and the second data-analysis object instruction, to the semantic interface unit 3600 in response to the third transition of the finite state machine. The data-analysis object instructions may be represented using any annotation, instruction, text, message, list, pseudo-code, comment, or the like, or any combination thereof that may be converted, transcoded, or translated into structured data-analysis instructions for accessing, retrieving, analyzing, or a combination thereof, data from the low-latency data, which may include generating data based on the low-latency data.

The relational analysis unit 3700 may provide an interface to permit the creation of user-defined syntax. For example, a user may associate a string with one or more tokens. Accordingly, when the string is entered, the pre-associated tokens are returned in lieu of searching for tokens to match the input.

The relational analysis unit 3700 may include a localization unit (not expressly shown). The localization, globalization, regionalization, or internationalization, unit may obtain source data expressed in accordance with a source expressive-form and may output destination data representing the source data, or a portion thereof, and expressed using a destination expressive-form. The data expressive-forms, such as the source expressive-form and the destination expressive-form, may include regional or customary forms of expression, such as numeric expression, temporal expression, currency expression, alphabets, natural-language elements, measurements, or the like. For example, the source expressive-form may be expressed using a canonical-form, which may include using a natural-language, which may be based on English, and the destination expressive-form may be expressed using a locale-specific form, which may include using another natural-language, which may be a natural-language that differs from the canonical-language. In another example, the destination expressive-form and the source expressive-form may be locale-specific expressive-forms and outputting the destination expressive-form representation of the source expressive-form data may include obtaining a canonical-form representation of the source expressive-form data and obtaining the destination expressive-form representation based on the canonical-form representation. Although, for simplicity and clarity, the grammars described herein, such as the data-analytics grammar and the natural language search grammar, are described with relation to the canonical expressive-form, the implementation of the respective grammars, or portions thereof, described herein may implement locale-specific expressive-forms. For example, the data-analytics tokenizer may include multiple locale-specific data-analytics tokenizers.

The natural language processing unit 3710 may receive input data including a natural language string, such as a natural language string generated in accordance with user input. The natural language string may represent a data request expressed in an unrestricted natural language form, for which data identified or obtained prior to, or in conjunction with, receiving the natural language string by the natural language processing unit 3710 indicating the semantic structure, correlation to the low-latency data access and analysis system 3000, or both, for at least a portion of the natural language string is unavailable or incomplete. Although not shown separately in FIG. 3, in some implementations, the natural language string may be generated or determined based on processing an analog signal, or a digital representation thereof, such as an audio stream or recording or a video stream or recording, which may include using speech-to-text conversion.

The natural language processing unit 3710 may analyze, process, or evaluate the natural language string, or a portion thereof, to generate or determine the semantic structure, correlation to the low-latency data access and analysis system 3000, or both, for at least a portion of the natural language string. For example, the natural language processing unit 3710 may identify one or more words or terms in the natural language string and may correlate the identified words to tokens defined in the low-latency data access and analysis system 3000. In another example, the natural language processing unit 3710 may identify a semantic structure for the natural language string, or a portion thereof. In another example, the natural language processing unit 3710 may identify a probabilistic intent for the natural language string, or a portion thereof, which may correspond to an operative feature of the low-latency data access and analysis system 3000, such as retrieving data from the internal data, analyzing data the internal data, or modifying the internal data.

The natural language processing unit 3710 may send, transmit, or otherwise communicate request data indicating the tokens, relationships, semantic data, probabilistic intent, or a combination thereof or one or more portions thereof, identified based on a natural language string to the relational analysis unit 3700.

The data utility unit 3720 may receive, process, and maintain user-agnostic utility data, such as system configuration data, user-specific utility data, such as utilization data, or both user-agnostic and user-specific utility data. The utility data may indicate whether a data portion, such as a column, a record, an insight, or any other data portion, has high utility or low utility within the system, such as among the users of the system. For example, the utility data may indicate that a defined column is a high-utility column or a low-utility column. The data utility unit 3720 may store the utility data, such as using the low-latency data structure. For example, in response to a user using, or accessing, a data portion, data utility unit 3720 may store utility data indicating the usage, or access, event for the data portion, which may include incrementing a usage event counter associated with the data portion. In some embodiments, the data utility unit 3720 may receive the information indicating the usage, or access, event for the data portion from the insight unit 3730, and the usage, or access, event for the data portion may indicate that the usage is associated with an insight.

As used herein, the term "utility" refers to a computer accessible data value, or values, representative of the usefulness of an aspect of the low-latency data access and analysis system, such as a data portion, an object, or a component of the low-latency data access and analysis system with respect to improving the efficiency, accuracy, or both, of the low-latency data access and analysis system. Unless otherwise expressly indicated, or otherwise clear from context, utility is relative within a defined data-domain or scope. For example, the utility of an object with respect to a user may be high relative to the utility of other objects with respect to the user. Express utility indicates expressly specified, defined, or configured utility, such as user or system defined utility. Probabilistic utility indicates utility calculated or determined using utility data and expresses a statistical probability of usefulness for a respective aspect of the low-latency data access and analysis system. Unless otherwise expressly indicated, or otherwise clear from context, utility is access context specific. For example, the utility of an object with respect to the access context of a user may be high relative to the utility of the object with respect to the respective access contexts of other users.

The data utility unit 3720 may receive a signal, message, or other communication, indicating a request for utility information. The request for utility information may indicate an object or data portion. The data utility unit 3720 may determine, identify, or obtain utility data associated with the identified object or data portion. The data utility unit 3720 may generate and send utility response data responsive to the request that may indicate the utility data associated with the identified object or data portion.

The data utility unit 3720 may generate, maintain, operate, or a combination thereof, one or more indexes, such as one or more of a usage (or utility) index, a resolved-request index, or a phrase index, based on the low-latency data stored in the distributed in-memory database 3300, the low-latency data access and analysis system 3000, or both.

The insight unit 3730 may automatically identify one or more insights, which may be data other than data expressly requested by a user, and which may be identified and prioritized, or both, based on probabilistic utility.

The object search unit 3800 may generate, maintain, operate, or a combination thereof, one or more object-indexes, which may be based on the analytical-objects represented in the low-latency data access and analysis system 3000, or a portion thereof, such as pinboards, answers, and worksheets. An object-index may be a defined data structure, or combination of data structures, for storing analytical-object data in a form optimized for searching. Although shown as a single unit in FIG. 3, the object search unit 3800 may interface with a distinct, separate, object indexing unit (not expressly shown).

The object search unit 3800 may include an object-index population interface, an object-index search interface, or both. The object-index population interface may obtain and store, load, or populate analytical-object data, or a portion thereof, in the object-indexes. The object-index search interface may efficiently access or retrieve analytical-object data from the object-indexes such as by searching or traversing the object-indexes, or one or more portions thereof. In some implementations, the object-index population interface, or a portion thereof, may be a distinct, independent unit.

The object-index population interface may populate, update, or both the object-indexes, such as periodically, such as in accordance with a defined temporal period, such as thirty minutes. Populating, or updating, the object-indexes may include obtaining object indexing data for indexing the analytical-objects represented in the low-latency data access and analysis system 3000. For example, the object-index population interface may obtain the analytical-object indexing data, such as from the distributed in-memory ontology unit 3500. Populating, or updating, the object-indexes may include generating or creating an indexing data structure representing an object. The indexing data structure for representing an object may differ from the data structure used for representing the object in other components of the low-latency data access and analysis system 3000, such as in the distributed in-memory ontology unit 3500.

The object indexing data for an analytical-object may be a subset of the object data for the analytical-object. The object indexing data for an analytical-object may include an object identifier for the analytical-object uniquely identifying the analytical-object in the low-latency data access and analysis system 3000, or in a defined data-domain within the low-latency data access and analysis system 3000. The low-latency data access and analysis system 3000 may uniquely, unambiguously, distinguish an object from other objects based on the object identifier associated with the object. The object indexing data for an analytical-object may include data non-uniquely identifying the object. The low-latency data access and analysis system 3000 may identify one or more analytical-objects based on the non-uniquely identifying data associated with the respective objects, or one or more portions thereof. In some implementations, an object identifier may be an ordered combination of non-uniquely identifying object data that, as expressed in the ordered combination, is uniquely identifying. The low-latency data access and analysis system 3000 may enforce the uniqueness of the object identifiers.

Populating, or updating, the object-indexes may include indexing the analytical-object by including or storing the object indexing data in the object-indexes. For example, the object indexing data may include data for an analytical-object, the object-indexes may omit data for the analytical-object, and the object-index population interface may include or store the object indexing data in an object-index. In another example, the object indexing data may include data for an analytical-object, the object-indexes may include data for the analytical-object, and the object-index population interface may update the object indexing data for the analytical-object in the object-indexes in accordance with the object indexing data.

Populating, or updating, the object-indexes may include obtaining object utility data for the analytical-objects represented in the low-latency data access and analysis system 3000. For example, the object-index population interface may obtain the object utility data, such as from the object utility unit 3810. The object-index population interface may include the object utility data in the object-indexes in association with the corresponding objects.

In some implementations, the object-index population interface may receive, obtain, or otherwise access the object utility data from a distinct, independent, object utility data population unit, which may read, obtain, or otherwise access object utility data from the object utility unit 3810 and may send, transmit, or otherwise provide, the object utility data to the object search unit 3800. The object utility data population unit may send, transmit, or otherwise provide, the object utility data to the object search unit 3800 periodically, such as in accordance with a defined temporal period, such as thirty minutes.

The object-index search interface may receive, access, or otherwise obtain data expressing usage intent with respect to the low-latency data access and analysis system 3000, which may represent a request to access data in the low-latency data access and analysis system 3000, which may represent a request to access one or more analytical-objects represented in the low-latency data access and analysis system 3000. The object-index search interface may generate one or more object-index queries based on the data expressing usage intent. The object-index search interface may send, transmit, or otherwise make available the object-index queries to one or more of the object-indexes.

The object-index search interface may receive, obtain, or otherwise access object search results data indicating one or more analytical-objects identified by searching or traversing the object-indexes in accordance with the object-index queries. The object-index search interface may sort or rank the object search results data based on probabilistic utility in accordance with the object utility data for the analytical-objects in the object search results data. In some implementations, the object-index search interface may include one or more object search ranking metrics with the object-index queries and may receive the object search results data sorted or ranked based on probabilistic utility in accordance with the object utility data for the objects in the object search results data and in accordance with the object search ranking metrics.

For example, the data expressing usage intent may include a user identifier, and the object search results data may include object search results data sorted or ranked based on probabilistic utility for the user. In another example, the data expressing usage intent may include a user identifier and one or more search terms, and the object search results data may include object search results data sorted or ranked based on probabilistic utility for the user identified by searching or traversing the object-indexes in accordance with the search terms.

The object-index search interface may generate and send, transmit, or otherwise make available the sorted or ranked object search results data to another component of the low-latency data access and analysis system 3000, such as for further processing and display to the user.

The object utility unit 3810 may receive, process, and maintain user-specific object utility data for objects represented in the low-latency data access and analysis system 3000. The user-specific object utility data may indicate whether an object has high utility or low utility for the user.

The object utility unit 3810 may store the user-specific object utility data, such as on a per-object basis, a per-activity basis, or both. For example, in response to data indicating an object access activity, such as a user using, viewing, or otherwise accessing, an object, the object utility unit 3810 may store user-specific object utility data indicating the object access activity for the object, which may include incrementing an object access activity counter associated with the object, which may be a user-specific object access activity counter. In another example, in response to data indicating an object storage activity, such as a user storing an object, the object utility unit 3810 may store user-specific object utility data indicating the object storage activity for the object, which may include incrementing a storage activity counter associated with the object, which may be a user-specific object storage activity counter. The user-specific object utility data may include temporal information, such as a temporal location identifier associated with the object activity. Other information associated with the object activity may be included in the object utility data.

The object utility unit 3810 may receive a signal, message, or other communication, indicating a request for object utility information. The request for object utility information may indicate one or more objects, one or more users, one or more activities, temporal information, or a combination thereof. The request for object utility information may indicate a request for object utility data, object utility counter data, or both.

The object utility unit 3810 may determine, identify, or obtain object utility data in accordance with the request for object utility information. The object utility unit 3810 may generate and send object utility response data responsive to the request that may indicate the object utility data, or a portion thereof, in accordance with the request for object utility information.

For example, a request for object utility information may indicate a user, an object, temporal information, such as information indicating a temporal span, and an object activity, such as the object access activity. The request for object utility information may indicate a request for object utility counter data. The object utility unit 3810 may determine, identify, or obtain object utility counter data associated with the user, the object, and the object activity having a temporal location within the temporal span, and the object utility unit 3810 may generate and send object utility response data including the identified object utility counter data.

In some implementations, a request for object utility information may indicate multiple users, or may omit indicating a user, and the object utility unit 3810 may identify user-agnostic object utility data aggregating the user-specific object utility data. In some implementations, a request for object utility information may indicate multiple objects, may omit indicating an object, or may indicate an object type, such as answer, pinboard, or worksheet, and the object utility unit 3810 may identify the object utility data by aggregating the object utility data for multiple objects in accordance with the request. Other object utility aggregations may be used.

The system configuration unit 3820 implement or apply one or more low-latency data access and analysis system configurations to enable, disable, or configure one or more operative features of the low-latency data access and analysis system 3000. The system configuration unit 3820 may store data representing or defining the one or more low-latency data access and analysis system configurations. The system configuration unit 3820 may receive signals or messages indicating input data, such as input data generated via a system access interface, such as a user interface, for accessing or modifying the low-latency data access and analysis system configurations. The system configuration unit 3820 may generate, modify, delete, or otherwise maintain the low-latency data access and analysis system configurations, such as in response to the input data. The system configuration unit 3820 may generate or determine output data, and may output the output data, for a system access interface, or a portion or portions thereof, for the low-latency data access and analysis system configurations, such as for presenting a user interface for the low-latency data access and analysis system configurations. Although not shown in FIG. 3, the system configuration unit 3820 may communicate with a repository, such as an external centralized repository, of low-latency data access and analysis system configurations; the system configuration unit 3820 may receive one or more low-latency data access and analysis system configurations from the repository, and may control or configure one or more operative features of the low-latency data access and analysis system 3000 in response to receiving one or more low-latency data access and analysis system configurations from the repository.

The user customization unit 3830 may receive, process, and maintain user-specific utility data, user defined configuration data, user defined preference data, or a combination thereof. The user-specific utility data may indicate whether a data portion, such as a column, a record, autonomous-analysis (autoanalysis) data, or any other data portion or object, has high utility or low utility to an identified user. For example, the user-specific utility data may indicate that a defined column is a high-utility column or a low-utility column. The user customization unit 3830 may store the user-specific utility data, such as using the low-latency data structure. The user-specific utility data may include, feedback data, such as feedback indicating user input expressly describing or representing the utility of a data portion or object in response to utilization of the data portion or object, such as positive feedback indicating high utility or negative feedback indicating low utility. The user customization unit 3830 may store the feedback in association with a user identifier. The user customization unit 3830 may store the feedback in association with the access context in which feedback was obtained. The user customization data, or a portion thereof, may be stored in an in-memory storage unit of the low-latency data access and analysis system. In some implementations, the user customization data, or a portion thereof, may be stored in the persistent storage unit 3930.

The system access interface unit 3900 may interface with, or communicate with, a system access unit (not shown in FIG. 3), which may be a client device, a user device, or another external device or system, or a combination thereof, to provide access to the internal data, features of the low-latency data access and analysis system 3000, or a combination thereof. For example, the system access interface unit 3900 may receive signals, message, or other communications representing interactions with the internal data, such as data expressing usage intent and may output response messages, signals, or other communications responsive to the received requests.

The system access interface unit 3900 may generate data for presenting a user interface, or one or more portions thereof, for the low-latency data access and analysis system 3000. For example, the system access interface unit 3900 may generate instructions for rendering, or otherwise presenting, the user interface, or one or more portions thereof and may transmit, or otherwise make available, the instructions for rendering, or otherwise presenting, the user interface, or one or more portions thereof to the system access unit, for presentation to a user of the system access unit. For example, the system access unit may present the user interface via a web browser or a web application and the instructions may be in the form of HTML, JavaScript, or the like.

In an example, the system access interface unit 3900 may include a data-analytics field user interface element in the user interface. The data-analytics field user interface element may be an unstructured string user input element or field. The system access unit may display the unstructured string user input element. The system access unit may receive input data, such as user input data, corresponding to the unstructured string user input element. The system access unit may transmit, or otherwise make available, the unstructured string user input to the system access interface unit 3900. The user interface may include other user interface elements and the system access unit may transmit, or otherwise make available, other user input data to the system access interface unit 3900.

The system access interface unit 3900 may obtain the user input data, such as the unstructured string, from the system access unit. The system access interface unit 3900 may transmit, or otherwise make available, the user input data to one or more of the other components of the low-latency data access and analysis system 3000.

In some embodiments, the system access interface unit 3900 may obtain the unstructured string user input as a sequence of individual characters or symbols, and the system access interface unit 3900 may sequentially transmit, or otherwise make available, individual or groups of characters or symbols of the user input data to one or more of the other components of the low-latency data access and analysis system 3000.

In some embodiments, system access interface unit 3900 may obtain the unstructured string user input as a sequence of individual characters or symbols, the system access interface unit 3900 may aggregate the sequence of individual characters or symbols, and may sequentially transmit, or otherwise make available, a current aggregation of the received user input data to one or more of the other components of the low-latency data access and analysis system 3000, in response to receiving respective characters or symbols from the sequence, such as on a per-character or per-symbol basis.

The real-time collaboration unit 3910 may receive signals or messages representing input received in accordance with multiple users, or multiple system access devices, associated with a collaboration context or session, may output data, such as visualizations, generated or determined by the low-latency data access and analysis system 3000 to multiple users associated with the collaboration context or session, or both. The real-time collaboration unit 3910 may receive signals or messages representing input received in accordance with one or more users indicating a request to establish a collaboration context or session, and may generate, maintain, or modify collaboration data representing the collaboration context or session, such as a collaboration session identifier. The real-time collaboration unit 3910 may receive signals or messages representing input received in accordance with one or more users indicating a request to participate in, or otherwise associate with, a currently active collaboration context or session, and may associate the one or more users with the currently active collaboration context or session. In some implementations, the input, output, or both, of the real-time collaboration unit 3910 may include synchronization data, such as temporal data, that may be used to maintain synchronization, with respect to the collaboration context or session, among the low-latency data access and analysis system 3000 and one or more system access devices associated with, or otherwise accessing, the collaboration context or session.

The third-party integration unit 3920 may include an electronic communication interface, such as an application programming interface (API), for interfacing or communicating between an external, such as third party, application or system, and the low-latency data access and analysis system 3000. For example, the third-party integration unit 3920 may include an electronic communication interface to transfer data between the low-latency data access and analysis system 3000 and one or more external applications or systems, such as by importing data into the low-latency data access and analysis system 3000 from the external applications or systems or exporting data from the low-latency data access and analysis system 3000 to the external applications or systems. For example, the third-party integration unit 3920 may include an electronic communication interface for electronic communication with an external exchange, transfer, load (ETL) system, which may import data into the low-latency data access and analysis system 3000 from an external data source or may export data from the low-latency data access and analysis system 3000 to an external data repository. In another example, the third-party integration unit 3920 may include an electronic communication interface for electronic communication with external machine learning analysis software, which may export data from the low-latency data access and analysis system 3000 to the external machine learning analysis software and may import data into the low-latency data access and analysis system 3000 from the external machine learning analysis software. The third-party integration unit 3920 may transfer data independent of, or in conjunction with, the system access interface unit 3900, the enterprise data interface unit 3400, or both.

The persistent storage unit 3930 may include an interface for storing data on, accessing data from, or both, one or more persistent data storage devices or systems. For example, the persistent storage unit 3930 may include one or more persistent data storage devices, such as the static memory 1200 shown in FIG. 1. Although shown as a single unit in FIG. 3, the persistent storage unit 3930 may include multiple components, such as in a distributed or clustered configuration. The persistent storage unit 3930 may include one or more internal interfaces, such as electronic communication or application programming interfaces, for receiving data from, sending data to, or both other components of the low-latency data access and analysis system 3000. The persistent storage unit 3930 may include one or more external interfaces, such as electronic communication or application programming interfaces, for receiving data from, sending data to, or both, one or more external systems or devices, such as an external persistent storage system. For example, the persistent storage unit 3930 may include an internal interface for obtaining key-value tuple data from other components of the low-latency data access and analysis system 3000, an external interface for sending the key-value tuple data to, or storing the key-value tuple data on, an external persistent storage system, an external interface for obtaining, or otherwise accessing, the key-value tuple data from the external persistent storage system, and an internal key-value tuple data for sending, or otherwise making available, the key-value tuple data to other components of the low-latency data access and analysis system 3000. In another example, the persistent storage unit 3930 may include a first external interface for storing data on, or obtaining data from, a first external persistent storage system, and a second external interface for storing data on, or obtaining data from, a second external persistent storage system.

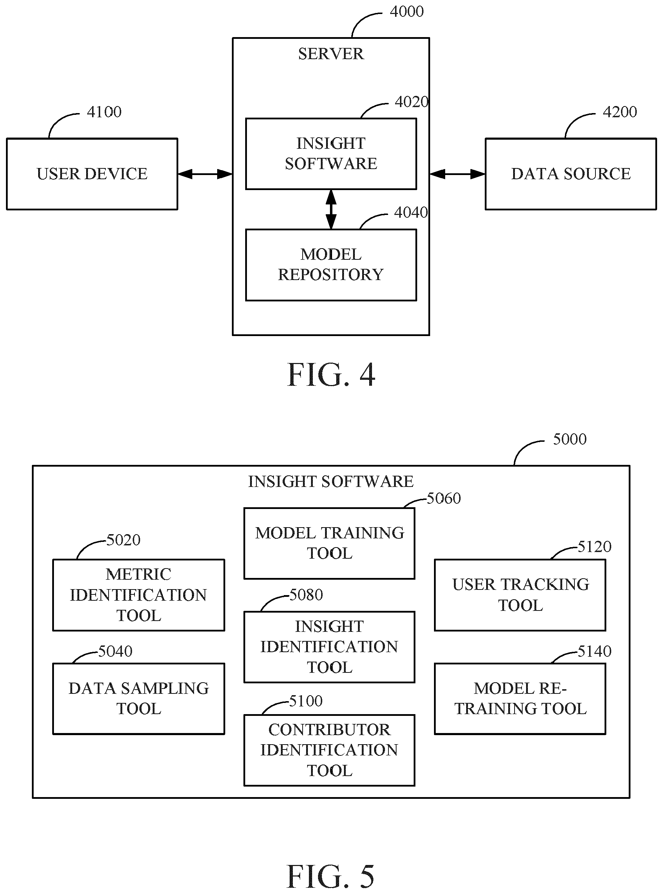

FIG. 4 is a block diagram of an example of a server 4000 for insight mining using machine learning. The server 4000 uses historical data related to a data metric to train a model that can predict future values of the data metric. If a current value of the data metric does not match a predicted value of the data metric obtained using the trained model, the server 4000 can output a notification (e.g., an alert) of the deviation. A deviation, as used herein, means a difference between the predicted value of the data metric and the current value of the data metric that meets some reporting criterion. As such, in response to determining that a difference between the predicted value of the data metric and the current value of the data metric meets the reporting criterion, the server 4000 outputs a notification descriptive of the deviation. The reporting criterion can be, or include, that the difference exceeds a threshold value (e.g., 5%, 10%, or some other threshold value). Other reporting criteria are possible and may depend on the semantics of the data metric.

The server 4000 may be included in, or may work in conjunction with, the internal database analysis portion 2200 of FIG. 2. As such, the server 4000 may be one or more of the servers 2220, 2240, 2260, and 2280 of FIG. 2. As shown, the server 4000 implements or includes an insight software 4020 and a model repository 4040. The server 4000 can receive the historical data and the new data from a data source 4200. The data source 4200 can be one or more of an external data source, such as one or more of the external data source portion 2100. The data source can additionally or alternatively be any other database, such as one or more of the in-memory database 3300 of FIG. 3. In an example, the server 4000 can receive the data related to the metric using a data interface unit, such as the enterprise data interface unit 3400 of FIG. 3. In an example, data from one or more external data sources may be ingested (e.g., input) into an in-memory database and the server 4000 uses the data ingested into the in-memory database for insight mining.

The server 4000 may receive input data from a user device 4100 related to a metric. For example, the server 4000 may receive input from (e.g., provided or entered by) a user of the user device 4100. For example, the server 4000 may receive a request related to a data metric from the user device. Such request is referred to herein as a "an insight request for a data metric," which is a request to identify an insight associated with the data metric. The request can be interpreted by the server 4000 (i.e., by the insight software 4020) as a request to detect deviations between predicted and current values of the data metric. The server 4000 can output (e.g., cause to be output) notifications of the deviations on user device 4100.

In some implementations, the insight software 4020 can additionally identify contributors to the deviation. The server 4000 can output data related to the identified contributors. For example, the insight software 4020 can receive a request for contributors (i.e., a contributor request), such as from a user of the user device 4100. In response to the contributor request, the insight software 4020 may identify one or more contributors and cause data related to the contributors to be transmitted to the user device 4100. In an example, the server 4000 can use inputs received from the user device 4100 to identify the contributors. The inputs can be obtained (e.g., derived, inferred, etc.) from prior interactions of the user with the server 4000.

In response to receiving the insight request for a data metric, the insight software 4020 may train one or more models of the model repository 4040. The one or more models are trained to predict (e.g., forecast) future values of the data metric. The one or more models are trained using historical data received from the data source 4200. A plurality of models (i.e., prediction models) may be available in the model repository 4040. The model repository 4040 can use properties of the historical data to select the one or more models to be trained. In an example, the insight software 4020 can analyze the historical data to determine the properties. In an example, input received from the user of the user device 4100 can be, or can be used to obtain, the properties.

The model repository 4040 can include any model that can be used for prediction, forecasting, or the like. Models that implement or are based on statistical, classification, clustering, nearest neighbor, simulation (e.g., Monte Carlo simulations), or other techniques can be used. Models based on statistical techniques can include Gaussian-based models, regression-based models (e.g., autoregressive models), histogram-based models, kernel-based models, mixed models (such as hidden Markov models), other models, or a combination thereof. Models based on classification techniques can include neural networks, Bayesian networks, decision trees, random forests, support vector machines (SVNs), other models, or a combination thereof. The model repository 4040 can include models that implement or can be used for anomaly detection and insight scoring. To illustrate, the insight software 4020 may include Gaussian techniques such as moving average, exponential multiple smoothening, or Seasonality Trend decomposition using Loess (STL) that can be used for anomaly detection. The model repository 4040 can include other models or types of models.

FIG. 5 is a block diagram of example functionality of an insight software 5000, which may be, for example, the insight software 4020 of FIG. 4. The insight software 5000 includes tools, such as programs, subprograms, functions, routines, subroutines, operations, executable instructions, and/or the like for, *inter alia* and as further described below, insight mining (e.g., identification) using machine learning.

At least some of the tools of the insight software 5000 can be implemented as respective software programs that may be executed by one or more computing devices, such as the computing device 1000 of FIG. 1. A software program can include machine-readable instructions that may be stored in a memory such as the static memory 1200 or the low-latency memory 1300 of FIG. 1, and that, when executed by a processor, such as processor 1100 of FIG. 1, may cause the computing device to perform the instructions of the software program.

As shown, the insight software 5000 includes a metric identification tool 5020, a data sampling tool 5040, a model training tool 5060, an insight identification tool 5080, a contributor identification tool 5100, a user tracking tool 5120, and a model re-training tool 5140. In some implementations, the insight software 5000 can include more or fewer tools. In some implementations, some of the tools may be combined, some of the tools may be split into more tools, or a combination thereof.

The metric identification tool 5020 can receive a request related to a data metric. The request can be used to obtain a resolved request that can be used to obtain a value for data metric. In an example, the request can include a data expressing usage intent. In an example, the request can include an identifier of an object (e.g., a visualization object, a worksheet object, a database table, a view, etc.) that may be associated with a resolved request. To illustrate, and without limitations, the request may include data expressing usage intents such as "daily sales" or "daily sales for the Western region." In another example, a user interface presented on a user device may include a visualization object corresponding to a worksheet object. An action associated with the visualization object enables the user to transmit an insight request to the metric identification tool 5020 that includes an identifier of at least one of the worksheet object or the visualization object. The metric identification tool 5020 uses an identifier to obtain the resolved object. Other ways of receiving an insight request at the insight software 5000 are possible.

The metric identification tool 5020 generates a time series for the data metric. The time series can be generated from the historical data related to the data metric. To generate the time series, a time dimension is identified. In an example, the time dimension may be received from the user. In an example, in response to the insight request, the insight software 5000 can transmit a list of dimensions that are determined to include timing data and that are related to the resolved request. The list of time dimensions can be obtained using ontology data, which may be included in a distributed in-memory ontology unit (such as the in-memory ontology unit 3500) or an ontological index. The timing data can be or include time data, date data, timestamp data, calendar data (such as days of week), and the like.

The metric identification tool 5020 may determine a timing granularity for the time dimension. The timing granularity can be used to generate the time series for model training, for obtaining predictions from the model, and for obtaining current values of the data metric when new data is received. In an example, the timing granularity can be inferred from the insight request or the resolved request. To illustrate, and without limitations, assume that the resolved request essentially translates to "weekly defects in the analytics module" and that each defect datum has associated a time dimension, *reported_timestamp,* indicating a timestamp (which includes a date and a time) that the defect was reported. As such, the metric identification tool 5020 can determine that the timing granularity is "week" (e.g., last 7 days) and that the data related to the data metric are to be aggregated based on the timing granularity to generate the time series, to obtain a prediction from the model, and to calculate current values. In an example, the timing granularity may be obtained from the user. For example, a list of available granularities (e.g., hourly, daily, weekly, monthly, etc.) may be presented to the user who selects the desired granularity. In an example, the user may provide a custom timing granularity (i.e., a timing granularity that is not in the available granularities). To illustrate, an example of custom granularity can be or include, with respect to a data metric related to traffic accidents, "3:00 PM to 7: 00 PM" (corresponding to afternoon traffic rush hours).

In an example, the metric identification tool 5020 can further determine whether the data metric can be forecasted. That is, the metric identification tool 5020 can determine whether the data metric is a forecast candidate (i.e., that the data metric is forecastable). Stated yet another way, the metric identification tool 5020 can determine whether it is possible for the insight software 5000 to predict values of the data metric. The metric identification tool 5020 can use properties of the historical data associated with the data metric to determine whether the data metric can be forecast candidate. The metric identification tool 5020 can use the data sampling tool 5040 to make the determination. If the insight software 5000 determines that the data metric cannot be forecasted, a notification to that effect can be transmitted to the user. If the data metric is determined to be a forecast candidate, one or more models may then be trained to predict the data metric. That the data metric is not a forecast candidate can mean that none of trained models, as described herein, provides an expected prediction of the data metric. A model may output a prediction and a confidence level associated with the prediction. As such, an expected prediction is a prediction that has an associated high level confidence (i.e., a confidence level that is greater than a confidence threshold, such as 85% or some other confidence threshold).

In some examples, it may not be practically possible to make all of the historical data available to the insight software 5000 for model training. The historical data may be housed (e.g., stored) in one or more external systems, which may be one or more cloud data warehouses (CDWs). As such, receiving all of the historical data can require a significant amount of time, and compute (e.g., memory, storage, and processor) and network resources. The historical data may include billions of rows of data rendering infeasible the retrieval (e.g., receipt) of the historical data for model training. In another example, the historical data may be readily and conveniently accessible, such as in the case that the historical data is stored in the low-latency database analysis system 3000.

As such, the one or more models can be trained using sampled data obtained using the data sampling tool 5040. Sampled data refers to at least a subset of the historical data that are used for model training. For simplicity of explanation, the sampled data may be assumed to be in single table (i.e., a sample data table). However, depending on the sampled data and as can be appreciated, that need not be the case. Different models of the model repository 4040 of FIG. 4 may require different sampled data. As such, there could be more than one sample data table. Regardless, a sample data table can be assumed to be available for training a particular model. The data sampling tool 5040 can create and populate the sample data table. Creating the sample data table includes determining ontology data of the sample data table, which includes determining and creating the schema including the columns of the sample data table.

The sample data table can include at least a column corresponding to the time dimension and a column for the corresponding values of the data metric . In the case that a resolved request includes one or more measures (e.g., columns), then the sample data table may also include these measures. To illustrate, with respect to the resolved request corresponding to the metric "sales for region West," the sampled data table may include a *region* dimension for the sales measure. Alternatively, the sample data table may not include the *region* dimension; rather the sample data table may be populated with sampled data obtained where region is equal to West. In some examples, a measure may be an aggregation of other measures . As such, the sample data table can include the aggregated measures.

In case that change contributors may need to be identified (such as in response to a user request), the sample data table can include candidate contributor measures corresponding to measures in the historical data that may be potential change contributors. In an example, the candidate contributor dimensions may be obtained from the user. For example, the user may be presented with a list of dimensions available in the ontology data and relating to the metric and the user can select candidate contributor dimensions that are of interest to the user. In another example, one or more candidate contributor dimensions can be inferred, as described below, based on past user interactions with the insight software 5000.

In an example, and for ease of identifying candidate contributor dimensions (further described below), the sample data table may also include such other dimensions that may be inferred to be included in (e.g., constitute) a dimension. To illustrate, assume that *product_type* is identified as candidate contributor dimension, as such the sample data table would include rows for different values of the *product_type* dimension (e.g., jackets, shirts, pants, or another value that may be in the historical data). As another illustration, the region West may be comprised of multiple other dimensions (or data values) that collectively constitute the region West. For example, a region may be defined by the particular states or particular stores within the states or particular stored within particular zip codes with the states.

To populate the sample data table, the data sampling tool 5040 may issue queries to the data source that includes the historical data. For example, when a dimension (e.g., a column) is added to the sample data table, the data sampling tool 5040 can issue (e.g., transmit) one or more queries to the data source to obtain data for the dimension. In an example, one query may be transmitted to obtain all the data required to populate all the data of the sample data table. To illustrate, a resolved query associated with an object (e.g., a worksheet object) may be used to obtain all the data of the sample data table. In an example, the sample data table can be stored in a distributed in-memory database, such as the in-memory database 3300 of FIG. 3.

In an example, to populate the sample data table with sampled data, the data sampling tool 5040 receives (e.g., queries for) a sample of rows (e.g., 20 thousands, 100 thousand rows, or some other number of rows), for each dimension of the dimensions in the sample data table. Sampling techniques can be used so that the sampled data is not skewed or is otherwise not representative of the historical data. For example, a predefined number of rows may be obtained for each time period in the historical data. To illustrate, and without limitations, assume that the historical data includes 10,000 rows for each day of the last 5 years. The data sampling tool 5040 may obtain 100 random rows for each of the days.

In an example, the data sampling tool 5040 may perform data cleansing on the sampled data of the sample data table. Data cleaning can include normalizing the data of the time dimension. The data of the time dimension (i.e., the time sample data) can be normalized to be in the range [0, T-1], where T corresponds to the number of unique values of the time sample data. That is, the time sample data can be converted to an increasing sequence of values (e.g., integers). In an example, the start (e.g., smallest) and end (e.g., largest) values of the time sample data are separately stored. The start and end values can be used to convert future input time data to the normalized range. In an example, any values in the time sample data that are not time values can be treated as errors and are excluded from the sample data table. In an example, string values are normalized.

In some situations, the values of a dimension may be normalized for training, such as the values of dimensions that have string values. To illustrate, the values of the dimension *region* may be "West," "Midwest," "East," and "Northeast." It is noted that, for example, "West" and "East" are also substrings of "Midwest" and "Northeast," respectively. If the string values are used as is in the training, the trained model may erroneously infer affinities between such values (such as between "West" and "Midwest" or between "East" and "Northeast"). To avoid such undesirable inferences, the string values of a dimension may be mapped to (e.g., substitutes with) enumeration values (such as 1 for "West," 2 for "Midwest," and so on).

However, in other situations, such affinity may be desirable. As such, the values of the dimension may be split into separate groups or dimensions so that models may be trained using the subgroups. To illustrate, the *region* dimension may be split into two separate dimensions, such as region and subregion. For example, "West" and "East" may be the regions; and "West," "Midwest," "East," and "Northeast" may be subregions. In an example, a user may determine that the affinity is desirable and may determine to split the dimension into subgroups. In another example, the determination (e.g., decision) to split the dimension can be determined both from user input as well as by learning from historical data.

The data sampling tool 5040 determines properties corresponding to the data in the time sample data. Properties may be determined for at least some (e.g., all) of the dimensions in the sample data. One or more of the properties of a dimension can be used to determine whether the dimension can be a candidate contributor dimension. If a dimension can be a candidate contributor dimension, the properties can be used to determine how to model the dimension or to select appropriate models for the dimension, as further described below. The properties can include statistical data, cardinality data, frequency data, other properties, or a combination thereof. The statistical data for a dimension can include a mean and a variance of the values of the measure in the sampled data.

The data sampling tool 5040 can obtain (e.g., count, calculate, determine, etc.) cardinality data for a dimension. The cardinality data can be or include a count of unique values of the dimension. In an example, the cardinality can be determined based on a grouping (e.g., clustering) of the values of the dimension. Clustering, which can be used to reduce the cardinality of the dimension, may be used in a case where there is a large number of unique values. Any number of strategies can be used for clustering. The clustering strategy may depend on the nature (i.e., semantics) of the dimension (i.e., the values of the dimension). In an example, the cardinality data can include the count of unique values, the number of clusters, and data representative of the clusters (e.g., the centroids of the clusters). Clustering techniques (such as regression, graph coloring, or other clustering algorithms) can be used to obtain independent features for a dimension.

The data sampling tool 5040 can obtain (e.g., count, calculate, determine, etc.) and store frequency data for the dimension. The frequency data can be obtained for the top-K values of the dimension, where K is predefined constant. That is, the frequency data can be obtained for the K most occurring values of the dimension in the sampled data. The frequency data can be obtained for the dimension values that occur in a predefined number or percentage of rows (e.g., 95%) of the rows of the sample data table.

The data sampling tool 5040 determines whether a dimension can be a candidate contributor dimension using the properties. That a dimension can be a candidate contributor dimension can mean that a model can be trained to learn a relationship between the dimension and the time measure and the data metric. That is, a model can be trained to measure (e.g., assess, evaluate, etc.) an impact of a change to the candidate contributor dimension on the data metric. Alternatively, or similarly, the model can be trained to output an expected value for the data metric given a value for the candidate contributor dimension. That a dimension cannot be a candidate contributor dimension means that no model can be trained, or trained to obtain reliable predictions, using the dimension. In such a case, a notification may be transmitted to the user indicating that the dimension will be ignored and cannot be a candidate contributor dimension. A dimension that cannot be a candidate contributor dimension is referred to herein as an invalid candidate contributor dimension.

If a dimension is determined to have high cardinality, then the dimension cannot be a candidate contributor dimension. Whether the cardinality for a dimension (grouped or ungrouped) is large may be determined based on a ratio of the cardinality to the total number of rows in the sample data table. If the ratio exceeds a threshold (e.g., 25%, 40%, or some other threshold), then the dimension is determined to have a large number of unique values. Other ways of determining that the cardinality of a dimension is high are possible. Stock-keeping unit (SKU) is an example of a dimension with high cardinality since each product sold has a unique SKU.

The frequency data can be used to determine whether a dimension can be a candidate contributor dimension. For example, if a dimension is determined to be heavily skewed, then the dimension cannot be a candidate contributor dimension. That the dimension is heavily skewed can mean that a few (e.g., 1 or 2) values of the dimension account for (e.g., appear in, etc.) a large percentage (e.g. 95% or 99%) of the rows of the sampled data. As is known, skewness refers to a distortion or asymmetry in the distribution of the values of the dimension in such a way as to significantly deviate from a symmetrical bell curve, or normal distribution.

The model training tool 5060 trains one or more models from a model repository, such as the model repository 4040 of FIG. 4. The model training tool 5060 may select the one or more models based on the dimension properties, the number of rows in the sample data set, other criteria, or a combination thereof. To illustrate, if the number of rows in the sample data set is relatively small, then neural-network based models may not be good candidates for training. In an example, the user may be prompted to select the models to be trained from the list of available models. A model trained to predict the data metric using the time series generated for the data metric is referred to herein as a metric predictor model. The model training tool 5060 may select a predefined number of models to train. Predicting a data metric includes predicting one or more values of the data metric.

The model training tool 5060 may split the sampled data into training data and testing data. The one of the trained models that performs best (e.g., comes closest to predicting the data metric in the testing data) is selected as the metric predictor model. In an example, a predefined number (e.g., 3) of the best performing models may be selected as metric predictor models. If none of the trained models exhibits acceptable performance, then the user is notified that the data metric cannot be reliably predicted. That is, the data metric is not a forecast candidate. As such, the insight software 5000 does not perform insight identification and alerting with respect to the data metric.

Any number of criteria can be used to determine that a trained model does not exhibit good performance (e.g., accuracy). For example, if a predetermined number of predictions (such as a percentage of the testing data) deviates from the values of the data metric in the testing data by at least a threshold, then the model training tool 5060 determines that the trained model does not exhibit good performance. In an example, the threshold can be based on a range of the data metric in the sampled data.

In an example, the insight software 5000 can output (such as to the user) a notification indicative of the number of times that the user would have been notified using a metric predictor model. To illustrate, using the sampled data to generate predictions according to the metric predictor model and comparing the predictions to the current values of the metric model, the model training tool 5060 may output a notification essentially stating that "you would have received <number> alerts in the last <time period> if alerting was based on <the model>," where <number>, <time period>, and <the model> are placeholder to be filled by the model training tool 5060. In an example, the insight software 5000 may prompt the user to enable or not enable alerting using the metric predictor model. The user may determine, for example, that that is an excessive number of alerts and that many of these alerts may be false positives (e.g., noise). As such, the user may not enable alerting based on the metric predictor model and the insight software 5000 does not perform insight identification and alerting with respect to the data metric using the metric predictor model.

The model training tool 5060 may train additional models based on candidate contributor dimensions. That is for each candidate contributor dimension, the model training tool 5060 can also train a model to predict values of the candidate contributor dimension. In an example, the model training tool 5060 can train models based on different possible values of the candidate contributor dimension. To illustrate, assume that *product_type* is a candidate contributor dimension and that possible values of this dimension are "jacket" and "pants." As such, the model training tool 5060 may train one or more models (i.e., contributor predictor) to predicting values of data metric based on the *product_type* dimension itself (i.e., as a whole), based on *product_type=jackets*, and based on *product_type=pants.*

In an example, the insight software 5000 may include a model selection tool (not shown) that is separate from the model training tool 5060. The model selection tool may select candidate models to train and may select the best model from amongst the trained models. The model selection tool may additionally generate a user understandable description of the noise or alert levels of a model. As such, the model selection tool may perform any steps or functions described herein with respect to the model training tool 5060 but that are not strictly model training steps or functions. As such, the model training tool 5060 may simply train models that the model selection tool may request or direct the model training tool 5060 to train.

In response to new data related to the data metric being received, such as from or by the data source 4200 of FIG. 4, the insight identification tool 5080 obtains respective predictions from the one or more metric predictor models. In another example, the insight identification tool 5080 obtains respective predictions from the one or more metric predictor models in response to a request (such as from the user) for the respective predictions. For example, a request for a prediction may be received at a prediction service (described below) indicating the metric predictor model. The insight identification tool 5080 may obtain (e.g., calculate, or request a calculation of) a current value of the data metric based on the new data. In another example, the insight identification tool 5080 may receive the current value. The current value may be compared to the respective predictions. If the current value deviates from all of the respective predictions, then the insight software 5000 alerts the user. That is, in response to determining that a difference between a predicted value and a current value meets a reporting criterion, a notification descriptive of the difference may be output to the user.

In an example, the insight software 5000 may include or have access to a prediction repository that can be used to cache (e.g., temporarily store) predictions recently obtained by the insight software 5000, such as predictions made within 10 hours, 1 day, 2 days, or some other recency criterion. As such, in response to receiving a request to obtain a prediction for a particular time value, the insight identification tool 5080 may first identify whether the prediction repository already includes such a prediction and, if so, the cached prediction may be returned to the requestor. As such, compute and memory resources may be preserved and latency of insight identification can be reduced, such as to within a few tens of milliseconds. The prediction repository may be populated with the latest predictions, have a limited size limit (e.g., 10 kilobytes) and may have a least recently used (LRU), a first-in-first-out (FIFO), or some other eviction policy.

In an example, the insight software 5000 may implement a prediction service that can be used to obtain predictions. A request may be received to provide (i.e., a prediction request) one or more predictions. The prediction request may include the data metric to be predicted (or an indication therefor). The request for the prediction may include other measures, which may be part of the data metric. The prediction request may include the current values of the data metric corresponding to the one or more predictions. The prediction request may include one or more time periods, or time values, for which the insight software 5000 is to obtain predictions. In response to the prediction request, the insight software 5000 may obtain the one or more predictions from the corresponding metric predictor model and determine, using the current values, whether the predictions deviate from the current values (i.e., whether the predictions meet reporting criteria). The insight software 5000 transmits a response (i.e., a prediction response) that includes the prediction values and whether the predictions deviate from the current values.

The contributor identification tool 5100 can identify the dimensions that contributed the most to the difference. In an example, the contributor identification tool 5100 obtains predictions for the candidate contributor dimensions from the respective contributor predictors. In an example, the differences corresponding to the highest differences can be reported to the user. The highest predefined number of differences along with the candidate contributor dimension can be reported. In an example, a visualization object may be presented to the user showing the change of the data metric with respect to (e.g., based on) the candidate contributor dimension over time.

In an example, alternatively or additionally, the contributor identification tool 5100 can identify the candidate contributor dimension to report to the user based on a historical contribution of the candidate contributor dimension to the data metric. To illustrate, assume that 60% of the value of the data metric (e.g., sales) is contributed by a first value (region=West) of a candidate contributor dimension (e.g., region) and that the remaining 40% are contributed by a second value (region=East). As such, the contributor identification tool 5100 can include logic that determines that sales data for the region=West would have a bigger impact on (e.g., higher contribution to) the total sales (i.e., the data metric) because the absolute numbers of the sales data metric for region=West are larger than those of the region=East. Assume further that the historical data indicate that the sales for the region=West have been growing at 5% whereas the sales data for region=East have been growing at 3%. As such, the contributor identification tool 5100 can determine that region=West would contribute more to an increase (or decrease) in the sales data metric than region=East. As such, the contributor identification tool 5100 can determine that any changes to the data metric will be more sensitive to sales numbers in the region=West. If new data indicate that instead of increasing at 5%, the sales data for region=West increased only at 4%; and instead of 3%, the sales data for region=East increased only at 2%. The contributor identification tool 5100 can determine that a 1% less in sales increase in region=West has a higher impact than a 1% less in sales increase in region=East. As such, the contributor identification tool 5100 identifies the dimension region=West as more of a contributor to the change than the dimension region=East.

The user tracking tool 5120 may be used to identify candidate contributor dimensions. For example, as the user interacts with the low-latency data access analysis system 3000 of FIG. 3, the insight software 4020 of FIG. 4, or both, the user tracking tool 5120 can construct (e.g., accumulate) a profile of the user. The profile can include dimensions that the user interacts positively or negatively with and/or dimensions that the user explicitly or implicitly interacts with. Examples of positive interactions with a dimension may include that the user included the dimension (such as at least a predefined number of times) in data expressing usage intents; or that the user indicated a liking (e.g., such as by selecting a "like" option in a user interface) to the low-latency database analysis system 3000 including the dimension in an output (e.g., a visualization object or any other output described herein). Examples of negative interactions include that the user not liking (e.g., such as by selecting a "do not like" option in a user interface). Examples of an explicit interaction include those described. Examples of implicit interactions include that that user did not include the dimension in an input, such as in data expressing usage intents; or that the user did not interact with an output of the low-latency database analysis system 3000 that includes or is related to the dimension. To illustrate, data related to a change contributor may be presented to the user. If the user interacted with a change contributor (such as by drilling into, or clicking on, the change contributor or liking the change contributor), then the user tracking tool 5120 can use such interactions as explicit positive interactions.

The model re-training tool 5140 can determine whether a model should be retrained. Retraining a model includes retraining (e.g., incrementally training) an already trained metric predictor model using additional training data or training a model in the model repository anew. As in known, training or retraining a model may include determining weight (e.g., coefficient) values that are used for obtaining predictions. However, training or retraining can have other semantics, depending on the model being trained.

In an example, a metric predictor model is regularly trained (e.g., according to a predefined schedule, such as monthly or the like). In another example, a metric predictor model is to be retrained if predictions of the metric predictor model have become unreliable. The model re-training tool 5140 can periodically evaluate (such as every predefined number of days, weeks, or predictions) the performance of the metric predictor model. If the model re-training tool 5140 determines that the metric predictor model is consistently unable to correctly predict the data metric, then the model re-training tool 5140 determines that the metric predictor model is to be retrained. In an example, the metric predictor model is retrained every time the prediction deviates from the current value of the data metric. In yet another example, the metric predictor model is predicted based on statistical behavior of the input data being monitored. To illustrate, if the current data metric values deviate by a certain absolute value or percentage (e.g., 5%, 10%, or some other threshold), which may be due to a significant event, then the model re-training tool 5140 determines that the metric predictor model is to be retrained.

Re-training the metric predictor model may not necessarily mean or lead to better predictions. As such, before the insight identification tool 5080 can use the re-trained metric predictor model, the model re-training tool 5140 may compare the performance of the metric predictor model to that of the re-trained metric predictor model to determine which provides consistently more accurate predictions. The one providing (e.g., generating, etc.) consistently more accurate predictions becomes the metric predictor model to be used by the insight identification tool 5080. That a first model consistently provides more accurate predictions than a second model can include that the first model provided more predictions that are closer to the current values of the data metric than the second model for at least a predefined number of predictions.

In an example, if a predetermined number of predictions of a data metric deviate from the current values of the data metric by at least a predefined threshold, then the model re-training tool 5140 determines that the metric predictor model is to be retrained. The predefined threshold may be a percent value. The metric predictor model can be retrained to account of new events that may sufficiently affect the predictions or that sufficiently change the nature of the data as compared to those historical data that the metric predictor model was trained on. To illustrate, online sales patterns or traffic patterns were significantly changed from historical patterns after the COVID-19 pandemic. In an example, the model re-training tool 5140 may receive an explicit indication (e.g., a request), such as from a user, to retrain or cause the metric predictor model to be re-trained. The metric predictor model (or the model from which the metric predictor model was retrained) can be retrained by the model training tool 5060.

It is noted that, depending on the model, the data, or both, some models may be incrementally retrained while others may not. It is also noted that, for a few periods (e.g., a relatively few future predictions), a re-trained model predictor may continue to predict according to the old baseline (i.e., the pre-retraining sampled data). After a few periods, the re-trained model predictor begins to predict according to the baseline (i.e., the retraining sampled data).

In an example, a user may not have access to a column, which may be a measure or dimension). That is, the user may not have access to the values of the column or to know that the column exists according to object- or column-level security. In an example, the model training tool 5060 may train a model without considering the object-level security. However, the object-level security may be used when identifying candidate contributor dimensions for the user. That is, for example, if a user does not have access to a dimension, then that dimension may not identified as a candidate contributor dimension for the user.

In an example, a user selecting a metric for prediction may not have access to row data of a table. To illustrate, row-level security may be configured such that a manager of a group of employees may not be able to view the salaries of employees of other groups in a Salaries table, where each row of the table corresponds to employee salary information.

Accordingly, and in an example, model training may be user-based or user-specific. That is, a model may be trained per user since the data obtained from a data source may be different for different users.

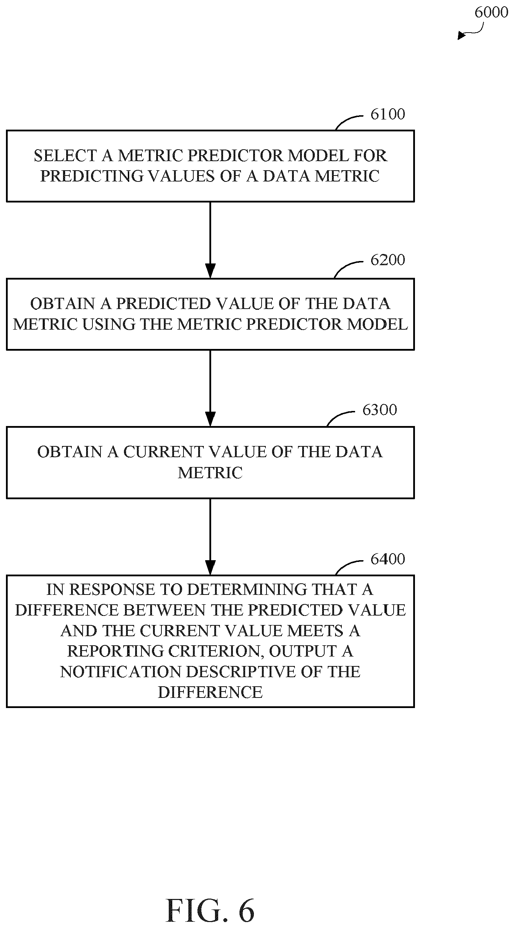

To further describe some implementations in greater detail, reference is next made to examples of techniques which may be performed by the testing software. FIG. 6 is a flowchart of an example of a technique 6000 of insight mining using machine learning. The technique 6000 can be implemented by an insight software, such as the insight software 4020 of FIG. 4 or the insight software 5000 of FIG. 5. The technique 6000 can be implemented, for example, as a software program that may be executed by computing devices such as the computing device 1000 of FIG. 1. The software program can include machine-readable instructions that may be stored in a memory such as the static memory 1200 of FIG. 1, and that, when executed by a processor, such as the processor 1100 of FIG. 1, may cause the computing device to perform the technique 6000. The technique 6000 can be implemented using specialized hardware or firmware. Multiple processors, memories, or both, may be used.

The technique 6000 may receive an data metric. The data metric may be received as described herein. For example, the data metric may be identified or described by a user, such as a user of the server 4000 of FIG 4.

At 6100, a metric predictor model for predicting the data metric is selected. That is, the metric predictor model can be used for predicting values of the data metric. As described herein, the metric predictor model can be an ML model that is selected based on a training using historical data related to the data metric. That the historical data is related to the data metric can include that values of the data metric are derivable from the historical data. For example, the historical data may not directly explicitly include values for the data metric. Rather, such values may be obtained using aggregation, filtering, collation, or other operations on the historical data. In an example, and as described herein, training of the model using the historical data related to the data metric can include generating time series data of the data metric using the historical data and obtaining the metric predictor model using the time series data. That is, the model can be trained using the time series data to obtain the metric predictor model.

At 6200, a predicted value of the data metric is obtained using the metric predictor model, as described herein. At 6300, an current (e.g., actual) value of the data metric is obtained using data other than the historical data. For example, the data than the historical data can be new data ingested, or available to, the insight software 4020 of FIG. 4. As such, the current value can be obtained (e.g., calculated, determined, etc.) from the new data. A difference between the predicted value and the current value is obtained. At 6600, in response to the difference meeting a reporting criterion, a notification descriptive of the difference is output. The reporting criterion can be as described herein.

In an example, the technique 6000 can include determining that at least one prediction value of the data metric obtained using the model deviates from at least one corresponding current value of the data metric. Responsive to the determination, the metric predictor model can be re-trained using at least the new data. In an example, the technique 6000 can include determining a number of notifications descriptive differences to be output by the metric predictor model using training data, as described above. In an example, the technique 6000 can include receiving, from a user, an indication of whether to use the metric predictor model to predict the metric data, as described above.

In an example, the technique 6000 can include training at least a subset of one or more models using historical data related to a second data metric. If the technique 6000 determines that none of the trained subset of the one or more models provides an expected prediction of the second data metric. Responsive to determining that none of the trained at least the subset of the one or more models provides an expected prediction, a notification can be output indicating that predicting the second data metric using future data related to the second data metric will not be performed.

In an example, the technique 6000 can include determining that a dimension included in a second dimension is invalid as a candidate contributor dimension. Responsive to the determination, a notification is output indicating that the second data metric cannot be predicted based on the dimension. In an example, the dimension is determined to be invalid based on a cardinality of the dimension. In another example, the dimension is determined to be invalid based on a skewness of data that include the dimension.

As used herein, the terminology "computer" or "computing device" includes any unit, or combination of units, capable of performing any method, or any portion or portions thereof, disclosed herein.

As used herein, the terminology "processor" indicates one or more processors, such as one or more special purpose processors, one or more digital signal processors, one or more microprocessors, one or more controllers, one or more microcontrollers, one or more application processors, one or more central processing units (CPU)s, one or more graphics processing units (GPU)s, one or more digital signal processors (DSP)s, one or more application specific integrated circuits (ASIC)s, one or more application specific standard products, one or more field programmable gate arrays, any other type or combination of integrated circuits, one or more state machines, or any combination thereof.

As used herein, the terminology "memory" indicates any computer-usable or computer-readable medium or device that can tangibly contain, store, communicate, or transport any signal or information that may be used by or in connection with any processor. For example, a memory may be one or more read only memories (ROM), one or more random-access memories (RAM), one or more registers, low power double data rate (LPDDR) memories, one or more cache memories, one or more semiconductor memory devices, one or more magnetic media, one or more optical media, one or more magneto-optical media, or any combination thereof.

As used herein, the terminology "instructions" may include directions or expressions for performing any method, or any portion or portions thereof, disclosed herein, and may be realized in hardware, software, or any combination thereof. For example, instructions may be implemented as information, such as a computer program, stored in memory that may be executed by a processor to perform any of the respective methods, algorithms, aspects, or combinations thereof, as described herein. Instructions, or a portion thereof, may be implemented as a special purpose processor, or circuitry, that may include specialized hardware for carrying out any of the methods, algorithms, aspects, or combinations thereof, as described herein. In some implementations, portions of the instructions may be distributed across multiple processors on a single device, on multiple devices, which may communicate directly or across a network such as a local area network, a wide area network, the Internet, or a combination thereof.

As used herein, the terminology "determine," "identify," "obtain," and "form" or any variations thereof, includes selecting, ascertaining, computing, looking up, receiving, determining, establishing, obtaining, or otherwise identifying or determining in any manner whatsoever using one or more of the devices and methods shown and described herein.

As used herein, the term "computing device" includes any unit, or combination of units, capable of performing any method, or any portion or portions thereof, disclosed herein.

As used herein, the terminology "example," "embodiment," "implementation," "aspect," "feature," or "element" indicates serving as an example, instance, or illustration. Unless expressly indicated, any example, embodiment, implementation, aspect, feature, or element is independent of each other example, embodiment, implementation, aspect, feature, or element and may be used in combination with any other example, embodiment, implementation, aspect, feature, or element.

As used herein, the terminology "or" is intended to mean an inclusive "or" rather than an exclusive "or." That is, unless specified otherwise, or clear from context, "X includes A or B" is intended to indicate any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from the context to be directed to a singular form.

Further, for simplicity of explanation, although the figures and descriptions herein may include sequences or series of steps or stages, elements of the methods disclosed herein may occur in various orders or concurrently. Additionally, elements of the methods disclosed herein may occur with other elements not explicitly presented and described herein. Furthermore, not all elements of the methods described herein may be required to implement a method in accordance with this disclosure. Although aspects, features, and elements are described herein in particular combinations, each aspect, feature, or element may be used independently or in various combinations with or without other aspects, features, and elements.

Although some embodiments herein refer to methods, it will be appreciated by one skilled in the art that they may also be embodied as a system or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "processor," "device," or "system." Furthermore, aspects of the present invention may take the form of a computer program product embodied in one or more computer readable mediums having computer readable program code embodied thereon. Any combination of one or more computer readable mediums may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to CDs, DVDs, wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Attributes may comprise any data characteristic, category, content, etc. that in one example may be non-quantifiable or non-numeric. Measures may comprise quantifiable numeric values such as sizes, amounts, degrees, etc. For example, a first column containing the names of states may be considered an attribute column and a second column containing the numbers of orders received for the different states may be considered a measure column.

Aspects of the present embodiments are described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a computer, such as a special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. The flowcharts and block diagrams in the figures illustrate the architecture, functionality, and operation of possible implementations of systems, methods, and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Further aspects of the invention are provided by the subject matter of the following clauses:

1. A method, comprising:

selecting a metric predictor model for predicting values of a data metric, the metric predictor model trained using historical data related to the data metric;
obtaining a predicted value of the data metric using the metric predictor model;
obtaining a current value of the data metric using data other than the historical data;
determining that a difference between the predicted value and the current value meets a reporting criterion; and
in response to determining that the difference meets the reporting criterion, outputting a notification descriptive of the difference.

2. The method of any preceding clause, wherein the metric predictor model is trained using the historical data related to the data metric by steps comprising:

generating time series data of the data metric using the historical data; and
obtaining the metric predictor model using the time series data.

3. The method of any preceding clause, wherein the data metric is a first data metric, further comprising:

receiving a second data metric;
training at least a subset of one or more models using historical data related to the second data metric;
determining that none of the trained at least the subset of the one or more models provides an expected prediction of the second data metric; and
outputting a notification indicating that predicting the second data metric using future data related to the second data metric will not be performed.

4. The method of any preceding clause, wherein the data metric is a first data metric, further comprising:

receiving a second data metric, wherein the second data metric comprises a dimension;
determining that the dimension is invalid as a candidate contributor dimension; and
outputting a notification indicating that the second data metric cannot be predicted based determining that the dimension is invalid.

5. The method of any preceding clause, wherein the dimension is determined to be invalid based on a cardinality of the dimension.
6. The method of any preceding clause, wherein the dimension is determined to be invalid based on a skewness of data that include the dimension.
7. The method of any preceding clause, further comprising:

determining that at least one prediction value of the data metric obtained using the metric predictor model deviates from at least one corresponding current value of the data metric; and
re-training the metric predictor model using at least the data other than the historical data.

8. The method of any preceding clause, further comprising:
determining a number of notifications descriptive of differences to be output by the metric predictor model using training data.
9. The method of any preceding clause, further comprising:
receiving, from a user, an indication of whether to use the metric predictor model to predict the data metric.
10. A device, comprising:

a memory; and
a processor, the processor configured to execute instructions stored in the memory to:

select a metric predictor model for predicting values of a data metric, the metric predictor model trained using historical data related to the data metric;
obtain a predicted value of the data metric using the metric predictor model;
obtain a current value of the data metric using data other than the historical data;
determine that a difference between the predicted value and the current value meets a reporting criterion; and
in response to determining that the difference meets the reporting criterion, output a notification descriptive of the difference.

11. The device of any preceding clause, wherein the metric predictor model is trained using the historical data related to the data metric by instructions comprising instructions to:

generate time series data of the data metric using the historical data; and
obtain the metric predictor model using the time series data.

12. The device of any preceding clause, wherein the data metric is a first data metric, the processor further configured to execute instructions to:

receive a second data metric;
train at least a subset of one or more models using historical data related to the second data metric;

determine that none of the trained at least the subset of the one or more models provides an expected prediction of the second data metric; and

output a notification indicating that predicting the second data metric using future data related to the second data metric will not be performed.

13. The device of any preceding clause, wherein the data metric is a first data metric, the processor further configured to execute instructions to:

receive a second data metric, wherein the second data metric comprises a dimension;

determine that the dimension is invalid as a candidate contributor dimension; and

output a notification indicating that the second data metric cannot be predicted based determining that the dimension is invalid.

14. The device of any preceding clause, wherein the dimension is determined to be invalid based on a cardinality of the dimension.

15. The device of any preceding clause, wherein the dimension is determined to be invalid based on a skewness of data that include the dimension.

16. The device of any preceding clause, wherein the processor is further configured to execute instructions to:

determine that at least one prediction value of the data metric obtained using the metric predictor model deviates from at least one corresponding current value of the data metric; and

re-train the metric predictor model using at least the data other than the historical data.

17. The device of any preceding clause, wherein the processor is further configured to execute instructions to:
determine a number of notifications descriptive of differences to be output by the metric predictor model using training data.

18. The device of any preceding clause, wherein the processor is further configured to execute instructions to:
receive, from a user, an indication of whether to use the metric predictor model to predict the data metric.

19. A non-transitory computer readable medium storing instructions operable to cause one or more processors to perform operations comprising:

selecting a metric predictor model for predicting values of a data metric, the metric predictor model trained using historical data related to the data metric;

obtaining a predicted value of the data metric using the metric predictor model;

obtaining a current value of the data metric using data other than the historical data;

determining that a difference between the predicted value and the current value meets a reporting criterion; and

in response to determining that the difference meets the reporting criterion, outputting a notification descriptive of the difference.

20. The non-transitory computer readable medium of any preceding clause, wherein the data metric is a first data metric, the operations further comprise:

receiving a second data metric, wherein the second data metric comprises a dimension;

determining that the dimension is invalid as a candidate contributor dimension; and

outputting a notification indicating that the second data metric cannot be predicted based determining that the dimension is invalid.

**Claims**

1. A method, comprising:

selecting a metric predictor model for predicting values of a data metric, the metric predictor model trained using historical data related to the data metric;

obtaining a predicted value of the data metric using the metric predictor model;

obtaining a current value of the data metric using data other than the historical data;

determining that a difference between the predicted value and the current value meets a reporting criterion; and

in response to determining that the difference meets the reporting criterion, outputting a notification descriptive of the difference.

2. The method of claim 1, wherein the metric predictor model is trained using the historical data related to the data metric by steps comprising:

generating time series data of the data metric using the historical data; and
obtaining the metric predictor model using the time series data.

3. The method of any preceding claim, wherein the data metric is a first data metric, further comprising:

receiving a second data metric;
training at least a subset of one or more models using historical data related to the second data metric;
determining that none of the trained at least the subset of the one or more models provides an expected prediction of the second data metric; and
outputting a notification indicating that predicting the second data metric using future data related to the second data metric will not be performed.

4. The method of any preceding claim, wherein the data metric is a first data metric, further comprising:

receiving a second data metric, wherein the second data metric comprises a dimension;
determining that the dimension is invalid as a candidate contributor dimension; and
outputting a notification indicating that the second data metric cannot be predicted based determining that the dimension is invalid.

5. The method of claim 4, wherein the dimension is determined to be invalid based on a cardinality of the dimension and/or a skewness of data that include the dimension.

6. The method of any preceding claim, further comprising:

determining that at least one prediction value of the data metric obtained using the metric predictor model deviates from at least one corresponding current value of the data metric; and
re-training the metric predictor model using at least the data other than the historical data.

7. The method of any preceding claim, further comprising:
determining a number of notifications descriptive of differences to be output by the metric predictor model using training data.

8. The method of any preceding claim, further comprising:
receiving, from a user, an indication of whether to use the metric predictor model to predict the data metric.

9. A device, comprising:

a memory; and
a processor, the processor configured to execute instructions stored in the memory to:

select a metric predictor model for predicting values of a data metric, the metric predictor model trained using historical data related to the data metric;
obtain a predicted value of the data metric using the metric predictor model;
obtain a current value of the data metric using data other than the historical data;
determine that a difference between the predicted value and the current value meets a reporting criterion; and
in response to determining that the difference meets the reporting criterion, output a notification descriptive of the difference.

10. The device of claim 9, wherein the metric predictor model is trained using the historical data related to the data metric by instructions comprising instructions to:

generate time series data of the data metric using the historical data; and
obtain the metric predictor model using the time series data.

11. The device of claim 9 or 10, wherein the data metric is a first data metric, the processor further configured to execute instructions to:

receive a second data metric;
train at least a subset of one or more models using historical data related to the second data metric;
determine that none of the trained at least the subset of the one or more models provides an expected prediction of the second data metric; and
output a notification indicating that predicting the second data metric using future data related to the second data metric will not be performed.

12. The device of any of claims 9 to 11, wherein the data metric is a first data metric, the processor further configured to execute instructions to:

receive a second data metric, wherein the second data metric comprises a dimension;
determine that the dimension is invalid as a candidate contributor dimension; and
output a notification indicating that the second data metric cannot be predicted based determining that the dimension is invalid.

13. The device of any of claims 9 to 12, wherein the processor is further configured to execute instructions to:

determine that at least one prediction value of the data metric obtained using the metric predictor model deviates from at least one corresponding current value of the data metric; and
re-train the metric predictor model using at least the data other than the historical data.

14. The device of any of claims 9 to 13, wherein the processor is further configured to execute instructions to:
determine a number of notifications descriptive of differences to be output by the metric predictor model using training data.

15. A non-transitory computer readable medium storing instructions operable to cause one or more processors to perform operations comprising:

selecting a metric predictor model for predicting values of a data metric, the metric predictor model trained using historical data related to the data metric;
obtaining a predicted value of the data metric using the metric predictor model;
obtaining a current value of the data metric using data other than the historical data;
determining that a difference between the predicted value and the current value meets a reporting criterion; and
in response to determining that the difference meets the reporting criterion, outputting a notification descriptive of the difference.

FIG. 1

FIG. 2

| SYSTEM ACCESS INTERFACE UNIT | THIRD-PARTY INTEGRATION | USER CUSTOMIZATION UNIT | SECURITY & GOVERNANCE |
|---|---|---|---|
| | REAL-TIME COLLABORATION | SYSTEM CONFIGURATION | |
| | OBJECT SEARCH UNIT | OBJECT UTILITY UNIT | |
| | NATURAL LANGUAGE UNIT | DATA UTILITY UNIT | |
| PERSISTENT STORAGE | RELATIONAL ANALYSIS UNIT | INSIGHT UNIT | |
| | SEMANTIC INTERFACE | DISTRIBUTED IN-MEMORY ONTOLOGY | |
| ENTERPRISE DATA INTERFACE UNIT | DISTRIBUTED IN-MEMORY DATABASE | | |
| | DISTRIBUTED CLUSTER MANAGER | | |

3000

3900 — SYSTEM ACCESS INTERFACE UNIT
3920 — THIRD-PARTY INTEGRATION
3830 — USER CUSTOMIZATION UNIT
3200 — SECURITY & GOVERNANCE
3910 — REAL-TIME COLLABORATION
3820 — SYSTEM CONFIGURATION
3800 — OBJECT SEARCH UNIT
3810 — OBJECT UTILITY UNIT
3710 — NATURAL LANGUAGE UNIT
3720 — DATA UTILITY UNIT
3930 — PERSISTENT STORAGE
3700 — RELATIONAL ANALYSIS UNIT
3730 — INSIGHT UNIT
3600 — SEMANTIC INTERFACE
3500 — DISTRIBUTED IN-MEMORY ONTOLOGY
3400 — ENTERPRISE DATA INTERFACE UNIT
3300 — DISTRIBUTED IN-MEMORY DATABASE
3100 — DISTRIBUTED CLUSTER MANAGER

FIG. 3

4000

SERVER

4100

USER DEVICE ⟷ 

4020

INSIGHT SOFTWARE

⟷ DATA SOURCE 4200

4040

MODEL REPOSITORY

## FIG. 4

5000

INSIGHT SOFTWARE

5060

MODEL TRAINING TOOL

5020

METRIC IDENTIFICATION TOOL

5120

USER TRACKING TOOL

5080

INSIGHT IDENTIFICATION TOOL

5040

DATA SAMPLING TOOL

5140

MODEL RE-TRAINING TOOL

5100

CONTRIBUTOR IDENTIFICATION TOOL

## FIG. 5

6000

6100

SELECT A METRIC PREDICTOR MODEL FOR
PREDICTING VALUES OF A DATA METRIC

6200

OBTAIN A PREDICTED VALUE OF THE DATA
METRIC USING THE METRIC PREDICTOR MODEL

6300

OBTAIN A CURRENT VALUE OF THE DATA
METRIC

6400

IN RESPONSE TO DETERMINING THAT A
DIFFERENCE BETWEEN THE PREDICTED VALUE
AND THE CURRENT VALUE MEETS A
REPORTING CRITERION, OUTPUT A
NOTIFICATION DESCRIPTIVE OF THE
DIFFERENCE

FIG. 6

Europäisches
Patentamt

European
Patent Office

Office européen
des brevets

# EUROPEAN SEARCH REPORT

Application Number

EP 23 18 4373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/350465 A1 (SCAVO DAMIAN ARIEL [IT]) 11 November 2021 (2021-11-11) * paragraph [0007] * ----- | 1-15 | INV. G06F16/2458 |

TECHNICAL FIELDS
SEARCHED      (IPC)

G06F

The present search report has been drawn up for all claims

| Place of search | Date of completion of the search | Examiner |
|---|---|---|
| The Hague | 3 November 2023 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 4373

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2023

| Patent document cited in search report | | Publication date | Patent family member(s) | | Publication date |
|---|---|---|---|---|---|
| US 2021350465 | A1 | 11-11-2021 | US | 2021350281 A1 | 11-11-2021 |
| | | | US | 2021350394 A1 | 11-11-2021 |
| | | | US | 2021350426 A1 | 11-11-2021 |
| | | | US | 2021350460 A1 | 11-11-2021 |
| | | | US | 2021350465 A1 | 11-11-2021 |
| | | | US | 2022121992 A1 | 21-04-2022 |
| | | | US | 2023070176 A1 | 09-03-2023 |
| | | | US | 2023237372 A1 | 27-07-2023 |

EPO FORM P0459

For more details about this annex : see Official Journal of the European Patent Office, No. 12/82